# EUROPEAN PATENT SPECIFICATION

(11) **EP 3 192 785 B1**
(45) Date of publication and mention of the grant of the patent: **31.03.2021**
(21) Application number: 15840878.1
(22) Date of filing: 11.09.2015
(51) Int. Cl.: B32B 17/10

(54) **INTERLAYER FOR LAMINATED GLASS, LAMINATED GLASS, AND METHOD FOR INSTALLING LAMINATED GLASS**
ZWISCHENSCHICHT FÜR VERBUNDGLAS, VERBUNDGLAS UND VERFAHREN ZUR INSTALLATION VON VERBUNDGLAS
COUCHE INTERMÉDIAIRE POUR VERRE FEUILLETÉ, VERRE FEUILLETÉ ET PROCÉDÉ DE FIXATION DE VERRE FEUILLETÉ

(30) Priority: 11.09.2014 JP 2014185383
(43) Date of publication of application: 19.07.2017
(73) Proprietor: Sekisui Chemical Co., Ltd., Osaka 530-8565 (JP)
(72) Inventor: YAMAMOTO, Masaki, Kouka-shi Shiga 528-8585 (JP); NAKAJIMA, Daisuke, Kouka-shi Shiga 528-8585 (JP); YAMAGUCHI, Kouhei, Kouka-shi Shiga 528-8585 (JP); OOTA, Yuusuke, Kouka-shi Shiga 528-8585 (JP)
(74) Representative: Ter Meer Steinmeister & Partner
(86) International application number: PCT/JP2015/075930
(87) International publication number: WO 2016/039469

(56) References cited:
- EP-A1- 3 100 989
- WO-A1-2013/118890
- WO-A1-2013/118890
- WO-A1-2014/021406
- WO-A1-2014/021407
- WO-A1-2014/021407
- DATABASE WPI Week 200828 28 February 2008 (2008-02-28) Thomson Scientific, London, GB; AN 2008-D91646 XP002778722, -& JP 2008 044609 A (SUMITOMO METAL MINING CO) 28 February 2008 (2008-02-28)

## Description

### TECHNICAL FIELD

The present invention relates to an interlayer film for laminated glass used for laminated glass of automobiles, buildings. Moreover, the present invention relates to laminated glass prepared with the interlayer film for laminated glass and a method for fitting laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings. The laminated glass is produced by sandwiching an interlayer film for laminated glass between a pair of glass plates. Such laminated glass used for the opening part of vehicles and buildings is required to have high heat shielding properties.

The energy amount of an infrared ray with a wavelength of 780 nm or more which is longer than that of visible light is small as compared with an ultraviolet ray. However, the thermal action of infrared rays is large, and when infrared rays are absorbed into a substance, heat is released from the substance. As such, infrared rays are generally called heat rays. Thus, in order to heighten the heat shielding properties of laminated glass, it is necessary to sufficiently cut off infrared rays.

As an interlayer film including heat shielding particles for effectively cutting off the infrared rays (heat rays), the following Patent Document 1 discloses an interlayer film including tin-doped indium oxide particles (ITO particles) or antimony-doped tin oxide particles (ATO particles). The following Patent Document 2 discloses an interlayer film including tungsten oxide particles. The following Patent Document 3 discloses an interlayer film for laminated glass comprising: an infrared ray reflection layer sandwiched between a first resin layer comprising a polyvinyl acetal, a plasticizer and an ultraviolet ray screening agent, a second layer containing a polyvinyl acetal, a plasticizer, an ultraviolet ray screening agent, 0.8 wt% tin-doped indium oxide particles, 0.1% tungsten oxide particles, and 0.006 wt% NIR-43V.

### Related Art Document

### Patent Document

Patent Document 1: WO 2001/025162 A1
Patent Document 2: WO 2005/087680 A1
Patent Document 3: WO 2014/021407 A1

### SUMMARY OF THE INVENTION

### PROBLEMS TO BE SOLVED BY THE INVENTION

With regard to laminated glass prepared with such a conventional interlayer film described in Patent Document 1 or 2, it is difficult to sufficiently heighten the heat shielding properties of the laminated glass, sufficiently lower the excitation purity thereof and sufficiently lower the YI (yellow index) value thereof. That is, it is difficult to obtain laminated glass satisfying all of high heat shielding properties, low excitation purity and a low YI value.

An object of the present invention is to provide an interlayer film for laminated glass which is high in heat shielding properties, is low in excitation purity and has a low YI value. Moreover, the present invention is also aimed at providing laminated glass prepared with the above-mentioned interlayer film for laminated glass and a method for fitting laminated glass.

### MEANS FOR SOLVING THE PROBLEMS

According to a broad aspect of the present invention, there is provided an interlayer film for laminated glass as defined in claim 1. The interlayer film for laminated glass includes an infrared ray reflection layer for reflecting infrared rays, a first resin layer containing a thermoplastic resin and a second resin layer containing a thermoplastic resin, the first resin layer being arranged on a first surface side of the infrared ray reflection layer, the second resin layer being arranged on a second surface side opposite to the first surface of the infrared ray reflection layer, and the second resin layer containing both of tin-doped indium oxide particles and tungsten oxide particles.

In a specific aspect of the interlayer film for laminated glass, the ratio of the content of the tin-doped indium oxide particles in 100% by weight of the second resin layer to the content of the tungsten oxide particles in 100% by weight of the second resin layer is greater than 8.

In a specific aspect of the interlayer film for laminated glass, the ratio of the content of the tin-doped indium oxide particles in 100% by weight of the second resin layer to the content of the tungsten oxide particles in 100% by weight of the second resin layer is greater than 5, and the content of the tungsten oxide particles in 100% by weight of the second resin layer is less than 0.1% by weight.

According to the present invention, the content of the tungsten oxide particles in 100% by weight of the second resin layer is 0.04% by weight or less and the total content of the tin-doped indium oxide particles and the tungsten oxide particles in 100% by weight of the second resin layer is 0.01% by weight or more and 6% by weight or less.

In a specific aspect of the interlayer film for laminated glass, the ratio of the content of the tin-doped indium oxide particles in 100% by weight of the second resin layer to the content of the tungsten oxide particles in 100% by weight of the second resin layer is 1 or more and 30 or less.

In a specific aspect of the interlayer film for laminated glass, the content of the tungsten oxide particles in 100% by weight of the second resin layer is 0.001% by weight or more.

In a specific aspect of the interlayer film for laminated glass, the second resin layer contains at least one kind of ingredient among a phthalocyanine compound, a naphthalocyanine compound and an anthracyanine compound.

In a specific aspect of the interlayer film for laminated glass, the total content of the at least one kind of ingredient among a phthalocyanine compound, a naphthalocyanine compound and an anthracyanine compound in 100% by weight of the second resin layer is 0.05% by weight or less.

In a specific aspect of the interlayer film for laminated glass, the infrared ray reflection layer has a property of exhibiting the infrared ray transmittance 40% or less at at least one wavelength within the range of 800 to 2000 nm.

In a specific aspect of the interlayer film for laminated glass, the infrared ray reflection layer is a resin film with metal foil, a multilayer laminated film in which a metal layer and a dielectric layer are formed on a resin layer, a multilayer resin film or a liquid crystal film.

In a specific aspect of the interlayer film for laminated glass, the thermoplastic resin in the first resin layer is a polyvinyl acetal resin and the thermoplastic resin in the second resin layer is a polyvinyl acetal resin.

In a specific aspect of the interlayer film for laminated glass, the first resin layer contains a plasticizer and the second resin layer contains a plasticizer.

In a specific aspect of the interlayer film for laminated glass, the first resin layer contains an ultraviolet ray screening agent.

In a specific aspect of the interlayer film for laminated glass, the second resin layer contains an ultraviolet ray screening agent.

In a specific aspect of the interlayer film for laminated glass, the infrared ray transmittance in the wavelength of 780 to 2100 nm of the first resin layer is higher than the infrared ray transmittance in the wavelength of 780 to 2100 nm of the second resin layer.

According to a broad aspect of the present invention, there is provided laminated glass as defined in claim 15. The laminated glass includes a first laminated glass member, a second laminated glass member and the interlayer film for laminated glass described above, the interlayer film being arranged between the first laminated glass member and the second laminated glass member, the first laminated glass member being arranged on the outside of the first resin layer in the interlayer film for laminated glass, and the second laminated glass member being arranged on the outside of the second resin layer in the interlayer film for laminated glass.

In a specific aspect of the laminated glass, the infrared ray transmittance in the wavelength of 780 to 2100 nm of the first laminated glass member is higher than the infrared ray transmittance in the wavelength of 780 to 2100 nm of the second laminated glass member.

According to a broad aspect of the present invention, there is provided a method as defined in claim 17. A method for fitting the above-described laminated glass on an opening part between an outer space and an inner space into which heat rays are made incident from the outer space, in building or a vehicle is disclosed, which method includes the step of fitting the laminated glass into the opening part so that the first laminated glass member is positioned at the outer space side and the second laminated glass member is positioned at the inner space side.

### EFFECT OF THE INVENTION

With regard to the interlayer film for laminated glass according to the present invention, since a first resin layer containing a thermoplastic resin, an infrared ray reflection layer for reflecting infrared rays and a second resin layer containing a thermoplastic resin are superposedly arranged in this order, and furthermore, the second resin layer contains both of tin-doped indium oxide particles and tungsten oxide particles, the heat shielding properties of laminated glass prepared with the interlayer film for laminated glass can be heightened, the excitation purity thereof can be lowered and the YI value thereof can be lowered.

### BRIEF DESCRIPTION OF DRAWINGS

[Fig. 1] Fig. 1 is a partially cut-away sectional view showing an interlayer film for laminated glass in accordance with one embodiment of the present invention.
[Fig. 2] Fig. 2 is a partially cut-away sectional view showing laminated glass prepared with an interlayer film for laminated glass in accordance with one embodiment of the present invention.

### MODE(S) FOR CARRYING OUT THE INVENTION

Hereinafter, the details of the present invention will be described.

The interlayer film for laminated glass (hereinafter, sometimes abbreviated as the interlayer film) according to the present invention is provided with an infrared ray reflection layer for reflecting infrared rays, a first resin layer containing a thermoplastic resin and a second resin layer containing a thermoplastic resin. In the interlayer film according to the present invention, the first resin layer is arranged on a first surface side of the infrared ray reflection layer, and the second resin layer is arranged on a second surface side opposite to the first surface of the infrared ray reflection layer. In the interlayer film according to the present invention, the second resin layer contains both of tin-doped indium oxide particles and tungsten oxide particles.

Since the interlayer film according to the present invention includes the above-mentioned configuration, the heat shielding properties of laminated glass prepared with the interlayer film can be heightened, the excitation purity thereof can be lowered and the yellow index (YI) value thereof can be lowered. In the present invention, the three kinds of performance which have hitherto been difficult to be simultaneously attained can be well attained, and all of high heat shielding properties, low excitation purity and a low YI value can be satisfied.

Hereinafter, the present invention will be elucidated by describing specific embodiments and examples of the present invention with reference to the drawings.

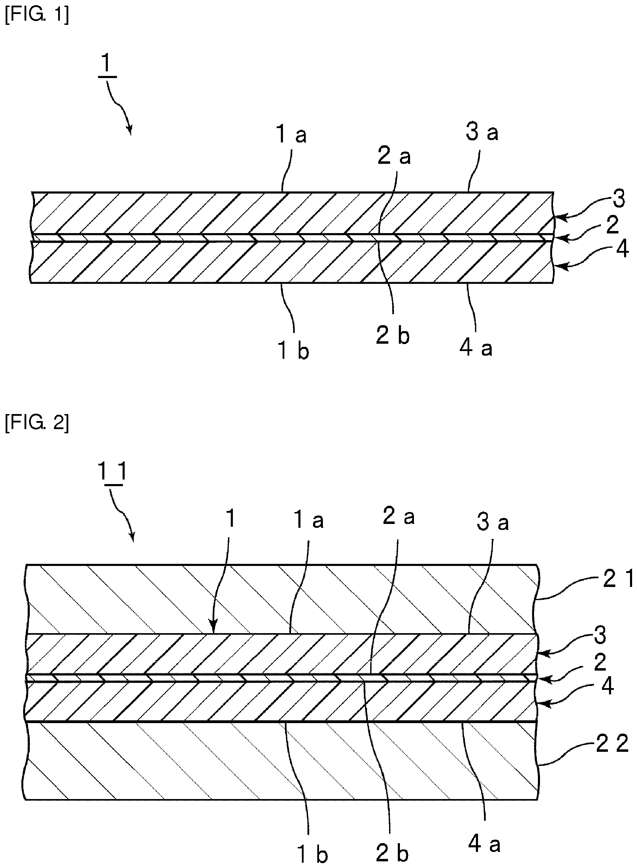

Fig. 1 shows laminated glass prepared with an interlayer film for laminated glass in accordance with one embodiment of the present invention schematically represented as a partially cut-away sectional view.

An interlayer film 1 shown in Fig. 1 is a multilayer interlayer film. The interlayer film 1 is used for obtaining laminated glass. The interlayer film 1 is an interlayer film for laminated glass. The interlayer film 1 is provided with an infrared ray reflection layer 2, a first resin layer 3 arranged on a first surface 2a side of the infrared ray reflection layer 2 and a second resin layer 4 arranged on a second surface 2b side opposite to the first surface 2a of the infrared ray reflection layer 2. The first resin layer 3 is layered on the first surface 2a of the infrared ray reflection layer 2. The second resin layer 4 is layered on the second surface 2b of the infrared ray reflection layer 2. The infrared ray reflection layer 2 is an intermediate layer and has heat ray reflecting performance. In the present embodiment, the first and second resin layers 3 and 4 are surface layers. The infrared ray reflection layer 2 is arranged between the first and second resin layers 3 and 4. The infrared ray reflection layer 2 is sandwiched between the first and second resin layers 3 and 4. Accordingly, the interlayer film 1 has a multilayer structure in which the first resin layer 3, the infrared ray reflection layer 2 and the second resin layer 4 are layered in this order.

In this connection, other layers may be arranged between the infrared ray reflection layer 2 and the first resin layer 3 and between the infrared ray reflection layer 2 and the second resin layer 4, respectively. It is preferred that the first resin layer 3 and the second resin layer 4 each be directly layered on the infrared ray reflection layer 2. Examples of another layer include a layer containing a thermoplastic resin such as a polyvinyl acetal resin, a layer containing polyethylene terephthalate, polyethylene naphthalate, and a layer formed of an inorganic compound such as metal foil. When such other layers are included, only one kind of the layer may be included and two or more kinds of different layers may be included.

The infrared ray reflection layer reflects infrared rays. The infrared ray reflection layer is not particularly limited as long as the layer has infrared ray reflecting performance. Because the infrared ray reflection layer is excellent in infrared ray reflecting performance, it is preferred that the infrared ray reflection layer have a property to exhibit the infrared ray transmittance be 40% or less at at least one wavelength within the range of 800 to 2000 nm. In this connection, the infrared ray transmittance of an infrared ray reflection layer used in the example described below satisfies the above-mentioned preferred condition. At at least one wavelength within the range of 800 to 2000 nm, the infrared ray transmittance is more preferably 30% or less and further preferably 20% or less. Specifically, the transmittance of each wavelength in the wavelength range of 800 to 2000 nm of the infrared ray reflection layer is measured in the following manner. An isolated infrared ray reflection layer is prepared. The spectral transmittance of each wavelength in the wavelength of 800 to 2000 nm of the infrared ray reflection layer is obtained in accordance with JIS R3106 (1998) using a spectrophotometer ("U-4100" available from Hitachi High-Technologies Corporation).

Examples of the infrared ray reflection layer include a resin film with metal foil, a multilayer laminated film in which a metal layer and a dielectric layer are formed on a resin layer, a film containing graphite, a multilayer resin film, a liquid crystal film. These films have infrared ray reflecting performance.

It is especially preferred that the infrared ray reflection layer be a resin film with metal foil, a film containing graphite, a multilayer resin film or a liquid crystal film. These films are highly excellent in infrared ray reflecting performance. Accordingly, by the use of these films, it is possible to obtain laminated glass in which the heat shielding properties are further heightened and high visible light transmittance can be maintained over a longer period of time.

The resin film with metal foil is provided with a resin film and metal foil layered on the outer surface of the resin film. Examples of the material for the resin film include a polyethylene terephthalate resin, a polyethylene naphthalate resin, a polyvinyl acetal resin, an ethylene-vinyl acetate copolymer resin, an ethylene-acryl copolymer resin, a polyurethane resin, a polyvinyl alcohol resin, a polyolefin resin, a polyvinyl chloride resin, a polyimide resin. Examples of the material for the metal foil include aluminum, copper, silver, gold, palladium, an alloy containing these metals.

The multilayer laminated film in which a metal layer and a dielectric layer are formed on a resin layer is a multilayer laminated film in which metal layers and dielectric layers are alternately layered in an arbitrary number of layers on a resin layer (resin film). In this connection, with regard to the multilayer laminated film in which a metal layer and a dielectric layer are formed on a resin layer, it is preferred that all of the metal layers and the dielectric layers are alternately layered, but, like a stack of a metal layer/a dielectric layer/a metal layer/a dielectric layer/a metal layer/a metal layer/a dielectric layer/a metal layer, a structural portion where a metal layer and a dielectric layer in the portion of the stack are not alternately layered may exist.

Examples of the material for the resin layer (resin film) in the multilayer laminated film include the same material as the material for the resin film in the resin film with metal foil. Examples of the material for the resin layer (resin film) in the multilayer laminated film include polyethylene, polypropylene, polylactic acid, poly(4-methylpentene-1), polyvinylidene fluoride, a cyclic polyolefin, polymethyl methacrylate, polyvinyl chloride, polyvinyl alcohol, a polyamide such as nylon 6, 11, 12 and 66, polystyrene, polycarbonate, polyethylene terephthalate, polyethylene naphthalate, polyester, polyphenylene sulfide, polyetherimide. Examples of the material for the metal layer in the multilayer laminated film include the same material as the material for the metal foil in the resin film with metal foil. On both sides or on one side of the metal layer, a coat layer of a metal or a mixed oxide can be provided. Examples of the material for the coat layer include ZnO, Al₂O₃, Ga₂O₃, InO₃, MgO, Ti, NiCr, Cu.

Examples of the material for the dielectric layer in the multilayer laminated film include indium oxide.

The multilayer resin film is a laminated film in which plural resin films are layered. Examples of the material for the multilayer resin film include the same material as the material for the resin layer (resin film) in the multilayer laminated film. The number of laminations of resin films in the multilayer resin film is 2 or more, may be 3 or more, and may be 5 or more. The number of laminations of resin films in the multilayer resin film may be 1000 or less, may be 100 or less, and may be 50 or less.

The multilayer resin film may be a multilayer resin film in which two or more kinds of thermoplastic resin layers having a different optical property (refractive index) are alternately or randomly layered in an arbitrary number of layers. Such a multilayer resin film is constituted so that desired infrared ray reflecting performance is attained.

Examples of the liquid crystal film include a film prepared by layering cholesteric liquid crystal layers which reflect light with an arbitrary wavelength in an arbitrary number of layers. Such a liquid crystal film is constituted so that desired infrared ray reflecting performance is attained.

It is preferred that the infrared ray transmittance in the wavelength of 780 to 2100 nm of the first resin layer be higher than the infrared ray transmittance in the wavelength of 780 to 2100 nm of the second resin layer, and it is more preferred that the infrared ray transmittance in the wavelength of 780 to 2100 nm of the first resin layer be higher by 10% or more than the infrared ray transmittance in the wavelength of 780 to 2100 nm of the second resin layer. Accordingly, considering from a different point of view, it is preferred that the infrared ray absorptance of the first resin layer be lower than the infrared ray absorptance of the second resin layer. Specifically, the infrared ray transmittance in the wavelength of 780 to 2100 nm of a first resin layer, a second resin layer is measured in the following manner. A first resin layer or a second resin layer (an object to be measured for the infrared ray transmittance) are interposed between two sheets of clear glass (2.5 mm in thickness) to prepare a sheet of laminated glass. Weighting factors in the range of 780 to 2100 nm among weighting factors in the range of 300 to 2100 nm shown in Appendix Table 2 in JIS R3106 (1998) are used, and each of weighting factors in the range of 780 to 2100 nm is divided by the total value of weighting factors in the range of 780 to 2100 nm to obtain a newly normalized weighting factor of the infrared ray transmittance in the range of 780 to 2100 nm. Then, the spectral transmittance in the wavelength of 780 to 2100 nm of a sheet of laminated glass is obtained in accordance with JIS R3106 (1998) using a spectrophotometer ("U-4100" available from Hitachi High-Technologies Corporation). The spectral transmittance obtained is multiplied by the newly normalized weighting factor to calculate the infrared ray transmittance in the wavelength of 780 to 2100 nm.

Laminated glass prepared with an interlayer film has hitherto been sometimes low in heat shielding properties and sometimes high in Tts (Total solar energy transmitted through a glazing). Furthermore, with regard to the conventional laminated glass, there is a problem that achieving both low Tts and high visible light transmittance (Visible Transmittance) at the same time is difficult.

In contrast, when the interlayer film is provided with the infrared ray reflection layer, and furthermore, first and second resin layers are arranged on both sides of the infrared ray reflection layer and the above-described relationship of the infrared ray transmittance (the relationship between the infrared ray transmittance of the first resin layer and the infrared ray transmittance of the second resin layer) is satisfied, it is possible to further heighten the heat shielding properties of laminated glass prepared with the interlayer film. Furthermore, it is possible to heighten the visible light transmittance of laminated glass prepared with the interlayer film. In the present invention, it is possible to obtain laminated glass which is low in Tts serving as an index of heat shielding properties, and furthermore, it is possible to obtain laminated glass which is high in visible light transmittance as described above. For example, it is possible to make the Tts of laminated glass 60% or less and make the visible light transmittance 65% or more. Furthermore, it is also possible to make the Tts 55% or less, it is also possible to make the Tts 50% or less, and furthermore, it is possible to make the visible light transmittance 70% or more. In this connection, also when the relationship between the infrared ray transmittance of the first laminated glass member and the infrared ray transmittance of the second laminated glass member described below or the relationship between the infrared ray transmittance of the whole layer composed of the first resin layer and the first laminated glass member and the infrared ray transmittance of the whole layer composed of the second resin layer and the second laminated glass member described below is satisfied, it is possible to improve the heat shielding properties and the visible light transmittance.

When the infrared ray transmittance of the first resin layer is higher than the infrared ray transmittance of the second resin layer, the first resin layer transmits a relatively large quantity of infrared rays. As such, most of the infrared rays transmitted through the first resin layer reach the infrared ray reflection layer. Since the infrared ray reflection layer reflects infrared rays, infrared rays which have reached the infrared ray reflection layer are reflected by the infrared ray reflection layer. Moreover, when the infrared ray transmittance of the first resin layer is high, most of the infrared rays reflected by the infrared ray reflection layer are transmitted through the first resin layer. As a result, a rise in the temperature of an interlayer film at the time when infrared rays are made incident into the interlayer film can be suppressed. As such, the heat shielding properties of the interlayer film are heightened, and furthermore, high visible light transmittance can be maintained over a long period of time since the interlayer film is excellent in light resistance. Moreover, by fitting laminated glass prepared with the interlayer film into an opening part of a building or a vehicle, a rise in the temperature of an inner space of a building or a vehicle can be effectively suppressed.

On the other hand, if the first resin layer and the infrared ray reflection layer transmit a part of infrared rays at all, the transmitted infrared rays reach the second resin layer. When the infrared ray transmittance of the second resin layer is low, the second resin layer effectively cuts off the transmission of infrared rays. As such, the quantity of heat rays passing through the whole interlayer film can be reduced. This also enables the heat shielding properties of the interlayer film to be effectively heightened, and by fitting laminated glass prepared with the interlayer film into an opening part of a building or a vehicle, a rise in the temperature of an inner space of a building or a vehicle can be effectively suppressed.

Moreover, as a result of enabling the quantity of infrared rays which reach the second resin layer to be reduced, the deterioration of the second resin layer can be suppressed and the light resistance of the whole interlayer film is enhanced. As such, high visible light transmittance can be maintained over a long period of time. Furthermore, the deterioration of heat shielding particles contained in the second resin layer and at least one kind of ingredient among a phthalocyanine compound, a naphthalocyanine compound and an anthracyanine compound preferably contained in the second resin layer can also be suppressed and high heat shielding properties can be maintained over a long period of time.

In the case of making the infrared ray transmittance in the wavelength of 780 to 2100 nm of the first resin layer higher than the infrared ray transmittance in the wavelength of 780 to 2100 nm of the second resin layer, it is preferred that the first resin layer and the second resin layer be different from each other in composition. In this connection, even when the first resin layer and the second resin layer are the same as each other in composition, by making the thickness of the first resin layer thinner than the thickness of the second resin layer, it is possible to make the infrared ray transmittance in the wavelength of 780 to 2100 nm of the first resin layer higher than the infrared ray transmittance in the wavelength of 780 to 2100 nm of the second resin layer.

The infrared ray transmittance in the wavelength of 780 to 2100 nm of the first resin layer and the infrared ray transmittance in the wavelength of 780 to 2100 nm of the second resin layer are defined as Tx1 and Tx2, respectively. It is preferred that Tx1 be higher than Tx2, and it is preferred that Tx1 be higher by 10% or more than Tx2. Because the heat shielding properties of laminated glass are further heightened, it is preferred that Tx1 be higher by 20% or more than Tx2, it is more preferred that Tx1 be higher by 25% or more than Tx2 and it is further preferred that Tx1 be higher by 30% or more than Tx2. Although the upper limit of a value of (Tx1 - Tx2) is not particularly limited, because the transparency of laminated glass is further enhanced, it is preferred that (Tx1 - Tx2) be 70% or less, it is more preferred that (Tx1 - Tx2) be 60% or less, it is further preferred that (Tx1 - Tx2) be 50% or less and it is especially preferred that (Tx1 - Tx2) be 40% or less. For the purpose of further enhancing the heat shielding properties and transparency of laminated glass, the preferred lower limit of Tx1 is 60%, the preferred upper limit thereof is 90%, the more preferred lower limit thereof is 65%, the more preferred upper limit thereof is 85%, the further preferred lower limit thereof is 70% and the further preferred upper limit thereof is 80%. Moreover, for the purpose of further enhancing the heat shielding properties and transparency of laminated glass, the preferred lower limit of Tx2 is 20%, the preferred upper limit thereof is 75%, the more preferred lower limit thereof is 25%, the more preferred upper limit thereof is 65%, the further preferred lower limit thereof is 30%, the further preferred upper limit thereof is 55%, the especially preferred lower limit thereof is 35% and the especially preferred upper limit thereof is 50%.

The infrared ray transmittance (Tir) is determined by measuring a value of infrared ray transmittance and normalizing the value with weighting factors described in JIS Z8722 and JIS R3106.

In this connection, the infrared ray transmittance Tx1 or Tx2 in the wavelength of 780 to 2100 nm of the first resin layer or the second resin layer is measured in the following manner.

A first resin layer or a second resin layer is interposed between two sheets of clear glass (2.5 mm in thickness) to prepare laminated glass. Weighting factors in the range of 780 to 2100 nm among weighting factors in the range of 300 to 2100 nm shown in Appendix Table 2 in JIS R3106 (1998) are used, and each of weighting factors in the range of 780 to 2100 nm is divided by the total value of weighting factors in the range of 780 to 2100 nm to obtain a newly normalized weighting factor of the infrared ray transmittance in the range of 780 to 2100 nm. Then, the spectral transmittance in the wavelength of 780 to 2100 nm of a sheet of laminated glass is obtained in accordance with JIS R3106 (1998) using a spectrophotometer ("U-4100" available from Hitachi High-Technologies Corporation). The spectral transmittance obtained is multiplied by the newly normalized weighting factor to calculate the infrared ray transmittance in the wavelength of 780 to 2100 nm.

The first resin layer contains a thermoplastic resin. It is more preferred that the thermoplastic resin in the first resin layer be a polyvinyl acetal resin. It is preferred that the first resin layer contain a plasticizer, and it is more preferred that the first resin layer contain a polyvinyl acetal resin and a plasticizer. It is preferred that the first resin layer contain an ultraviolet ray screening agent, and it is preferred that the first resin layer contain an oxidation inhibitor.

The second resin layer contains a thermoplastic resin. It is more preferred that the thermoplastic resin in the second resin layer be a polyvinyl acetal resin. It is preferred that the second resin layer contain a plasticizer, and it is more preferred that the second resin layer contain a polyvinyl acetal resin and a plasticizer. It is preferred that the second resin layer contain an ultraviolet ray screening agent, and it is preferred that the second resin layer contain an oxidation inhibitor.

The second resin layer contains both of tin-doped indium oxide particles and tungsten oxide particles as the heat shielding compound. When the heat shielding compound is contained in the second resin layer, it is easy to make the infrared ray transmittance of the first resin layer higher than the infrared ray transmittance of the second resin layer. The first resin layer may contain a heat shielding compound. Moreover, when the content (% by weight) of the heat shielding compound in the first resin layer is smaller than the content (% by weight) of the heat shielding compound in the second resin layer, it is easy to make the infrared ray transmittance of the first resin layer higher than the infrared ray transmittance of the second resin layer. Examples of the heat shielding compound include heat shielding particles such as metal oxide particles, at least one kind of ingredient among a phthalocyanine compound, a naphthalocyanine compound and an anthracyanine compound (hereinafter, sometimes referred to as Ingredient X). In this connection, the heat shielding compound means a compound capable of absorbing infrared rays. When a plurality of heat shielding compounds are contained in the first resin layer or the second resin layer, the total content (% by weight) of the heat shielding compound in the first resin layer is preferably smaller than the total content (% by weight) of the heat shielding compound in the second resin layer, more preferably smaller by 0.05% by weight or more, further preferably smaller by 0.1% by weight or more, especially preferably smaller by 0.2% by weight or more and most preferably smaller by 0.4% by weight or more. Furthermore, because the heat shielding properties are further heightened, it is preferred that the difference between the total content (% by weight) of the heat shielding compound in the second resin layer and the total content (% by weight) of the heat shielding compound in the first resin layer be 2% by weight or less.

Hereinafter, the details of materials constituting the first and second resin layers will be described.

### (Thermoplastic resin)

The first and second resin layers contain a thermoplastic resin. The thermoplastic resin is not particularly limited. As the thermoplastic resin, a conventionally known thermoplastic resin can be used. One kind of the thermoplastic resin may be used alone, and two or more kinds thereof may be used in combination. The thermoplastic resin in the first resin layer and the thermoplastic resin in the second resin layer may be the same as or different from each other.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin. Thermoplastic resins other than these may be used.

It is preferred that the thermoplastic resin be a polyvinyl acetal resin. By using a polyvinyl acetal resin and a plasticizer together, the adhesive force of each of the first and second resin layers to a laminated glass member and another layer such as an infrared ray reflection layer is further heightened.

For example, the polyvinyl acetal resin can be produced by acetalizing polyvinyl alcohol with an aldehyde. It is preferred that the polyvinyl acetal resin be an acetalized product of polyvinyl alcohol. For example, the polyvinyl alcohol can be produced by saponifying polyvinyl acetate. The saponification degree of the polyvinyl alcohol generally lies within the range of 70 to 99.8% by mole.

The average polymerization degree of the polyvinyl alcohol is preferably 200 or more, more preferably 500 or more, preferably 5000 or less, more preferably 4000 or less, further preferably 3500 or less, especially preferably 3000 or less and most preferably 2500 or less. When the average polymerization degree is the above lower limit or more, the penetration resistance of laminated glass is further enhanced. When the average polymerization degree is the above upper limit or less, formation of an interlayer film is facilitated. In this connection, the average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is suitably used as the above-mentioned aldehyde. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde. Of these, propionaldehyde, n-butyraldehyde, isobutyraldehyde, n-hexylaldehyde or n-valeraldehyde is preferred, propionaldehyde, n-butyraldehyde or isobutyraldehyde is more preferred, and n-butyraldehyde is further preferred. One kind of the aldehyde may be used alone, and two or more kinds thereof may be used in combination.

The content of the hydroxyl group (the amount of hydroxyl groups) of the polyvinyl acetal resin is preferably 15% by mole or more, more preferably 18% by mole or more, further preferably 20% by mole or more, especially preferably 28% by mole or more, preferably 40% by mole or less, more preferably 35% by mole or less and further preferably 32% by mole or less. When the content of the hydroxyl group is the above lower limit or more, the adhesive force of the interlayer film is further heightened. Moreover, when the content of the hydroxyl group is the above upper limit or less, the flexibility of the interlayer film is enhanced and the handling of the interlayer film is facilitated.

The content of the hydroxyl group of the polyvinyl acetal resin is is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6726 "Testing methods for polyvinyl alcohol" to be determined.

The acetylation degree (the amount of acetyl groups) of the polyvinyl acetal resin is preferably 0.1% by mole or more, more preferably 0.3% by mole or more, further preferably 0.5% by mole or more, preferably 30% by mole or less, more preferably 25% by mole or less, further preferably 20% by mole or less, especially preferably 15% by mole or less and most preferably 3% by mole or less. When the acetylation degree is the above lower limit or more, the compatibility between the polyvinyl acetal resin and a plasticizer is heightened. When the acetylation degree is the above upper limit or less, with regard to the interlayer film and laminated glass, the moisture resistance thereof is enhanced.

The acetylation degree is a mole fraction, represented in percentage, obtained by dividing a value obtained by subtracting the amount of ethylene groups to which the acetal group is bonded and the amount of ethylene groups to which the hydroxyl group is bonded from the total amount of ethylene groups in the main chain by the total amount of ethylene groups in the main chain. For example, the amount of ethylene groups to which the acetal group is bonded can be measured in accordance with JIS K6728 "Testing methods for polyvinyl butyral".

The acetalization degree of the polyvinyl acetal resin (the butyralization degree in the case of a polyvinyl butyral resin) is preferably 60% by mole or more, more preferably 63% by mole or more, preferably 85% by mole or less, more preferably 75% by mole or less and further preferably 70% by mole or less. When the acetalization degree is the above lower limit or more, the compatibility between the polyvinyl acetal resin and a plasticizer is heightened. When the acetalization degree is the above upper limit or less, the reaction time required for producing the polyvinyl acetal resin is shortened.

The acetalization degree is a mole fraction, represented in percentage, obtained by dividing the amount of ethylene groups to which the acetal group is bonded by the total amount of ethylene groups in the main chain.

The acetalization degree can be calculated by a method in accordance with JIS K6728 "Testing methods for polyvinyl butyral".

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". When the polyvinyl acetal resin is a polyvinyl butyral resin, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral".

### (Plasticizer)

From the viewpoint of further heightening the adhesive force of an interlayer film, it is preferred that the first resin layer contain a plasticizer, and it is preferred that the second resin layer contain a plasticizer. When the thermoplastic resin in each of the first and second resin layers is a polyvinyl acetal resin, it is especially preferred that each of the first and second resin layers contain a plasticizer.

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, phosphate plasticizers such as an organic phosphate plasticizer and an organic phosphite plasticizer. Of these, organic ester plasticizers are preferred. It is preferred that the plasticizer be a liquid plasticizer.

The monobasic organic acid ester is not particularly limited and examples thereof include a glycol ester obtained by the reaction of a glycol with a monobasic organic acid, an ester of triethylene glycol or tripropylene glycol with a monobasic organic acid. Examples of the glycol include triethylene glycol, tetraethylene glycol, tripropylene glycol. Examples of the monobasic organic acid include butyric acid, isobutyric acid, caproic acid, 2-ethylbutyric acid, hepthylic acid, n-octylic acid, 2-ethylhexanoic acid, n-nonylic acid, decylic acid.

The polybasic organic acid ester is not particularly limited and examples thereof include an ester compound of a polybasic organic acid and an alcohol having a linear or branched structure of 4 to 8 carbon atoms. Examples of the polybasic organic acid include adipic acid, sebacic acid, azelaic acid.

The organic ester plasticizer is not particularly limited and examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester. Organic ester plasticizers other than these may be used.

The organic phosphate plasticizer is not particularly limited and examples thereof include tributoxyethyl phosphate, isodecyl phenyl phosphate, triisopropyl phosphate.

It is preferred that the plasticizer be a diester plasticizer represented by the following formula (1).

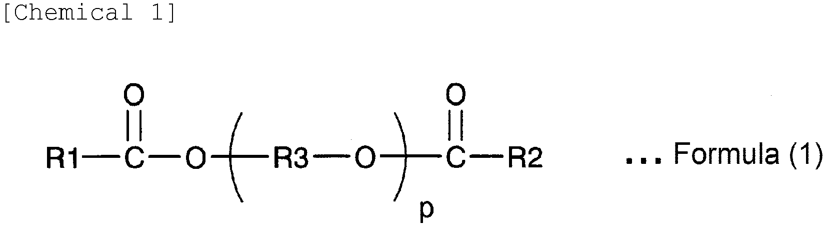

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include at least one kind among triethylene glycol di-2-ethylhexanoate (3GO) and triethylene glycol di-2-ethylbutyrate (3GH), and it is more preferred that the plasticizer include triethylene glycol di-2-ethylhexanoate.

The content of the plasticizer is not particularly limited. In each of the first and second resin layers, relative to 100 parts by weight of the thermoplastic resin, the content of the plasticizer is preferably 25 parts by weight or more, more preferably 30 parts by weight or more, further preferably 35 parts by weight or more, preferably 75 parts by weight or less, more preferably 60 parts by weight or less, further preferably 50 parts by weight or less and especially preferably 40 parts by weight or less. When the content of the plasticizer is the above lower limit or more, the penetration resistance of laminated glass is further enhanced. When the content of the plasticizer is the above upper limit or less, the transparency of the interlayer film is further enhanced.

### (Heat shielding compound)

### Ingredient X:

The second resin layer contains both of tin-doped indium oxide particles and tungsten oxide particles as the heat shielding compound. It is preferred that the second resin layer contain at least one kind of Ingredient X among a phthalocyanine compound, a naphthalocyanine compound and an anthracyanine compound as the heat shielding compound. The Ingredient X is a heat shielding compound. The first resin layer may contain a heat shielding compound, may contain heat shielding particles and may contain the Ingredient X. The first resin layer may contain at least one kind among the heat shielding particles and the Ingredient X. By using the Ingredient X in at least one layer among the interlayer film as a whole, infrared rays (heat rays) can be effectively cut off. By making the second resin layer contain the Ingredient X, infrared rays can be further effectively cut off.

The Ingredient X is not particularly limited. As the Ingredient X, conventionally known phthalocyanine compound, naphthalocyanine compound and anthracyanine compound can be used. One kind of the Ingredient X may be used alone, and two or more kinds thereof may be used in combination.

Examples of the Ingredient X include phthalocyanine, a derivative of phthalocyanine, naphthalocyanine, a derivative of naphthalocyanine, anthracyanine, a derivative of anthracyanine. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

From the viewpoint of further heightening the heat shielding properties of the interlayer film and laminated glass, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. From the viewpoint of still further enhancing the heat shielding properties of the interlayer film and the laminated glass, it is preferred that the Ingredient X have a structural unit in which an oxygen atom is bonded to a vanadium atom.

When the first resin layer or the second resin layer contains the Ingredient X, in 100% by weight of each of the first and second resin layers, the content of the Ingredient X is preferably 0.001% by weight or more, more preferably 0.005% by weight or more, further preferably 0.01% by weight or more, especially preferably 0.02% by weight or more, preferably 0.2% by weight or less, more preferably 0.1% by weight or less, further preferably 0.05% by weight or less, especially preferably 0.04% by weight or less. When the content of the Ingredient X in each of the first and second resin layers is the above lower limit or more and the above upper limit or less, the heat shielding properties are sufficiently heightened and the visible light transmittance is sufficiently heightened. For example, it is possible to make the visible light transmittance 70% or more.

From the viewpoint of effectively lowering the excitation purity, in 100% by weight of the second resin layer, the content of the Ingredient X is preferably 0.05% by weight or less and more preferably 0.02% by weight or less. In 100% by weight of the second resin layer, the content of the Ingredient X is preferably 0.001% by weight or more.

### Heat shielding particles:

The second resin layer contains both of tin-doped indium oxide particles (ITO particles) and tungsten oxide particles (CWO particles) as the heat shielding particles. The first resin layer may contain heat shielding particles. The heat shielding particle is a heat shielding compound. By making the first resin layer contain heat shielding particles, infrared rays (heat rays) can be effectively cut off. By making the second resin layer contain heat shielding particles, infrared rays can be further effectively cut off.

From the viewpoint of further heightening the heat shielding properties of laminated glass, it is more preferred that the heat shielding particles be metal oxide particles. It is preferred that the heat shielding particle be a particle (a metal oxide particle) formed from an oxide of a metal. One kind of the heat shielding particles may be used alone, and two or more kinds thereof may be used in combination.

The energy amount of an infrared ray with a wavelength 780 nm or more which is longer than that of visible light is small as compared with an ultraviolet ray. However, the thermal action of infrared rays is large, and once infrared rays are absorbed into a substance, heat is released from the substance. As such, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles. Heat shielding particles other than these may be used. Of these, since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

The tungsten oxide particles are generally represented by the following formula (X1) or the following formula (X2). In the interlayer film, the tungsten oxide particles represented by the following formula (X1) or the following formula (X2) are suitably used.

W_{y}O_{z} ... Formula (X1)

In the foregoing formula (X1), W represents tungsten, O represents oxygen, and y and z satisfy the relation of 2.0 < z/y < 3.0.

MₓW_{y}O_{z} ... Formula (X2)

In the foregoing formula (X2), M represents at least one kind of element selected from the group consisting of H, He, an alkali metal, an alkaline earth metal, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta and Re, W represents tungsten, O represents oxygen, and x, y and z satisfy the relations of 0.001 ≤ x/y ≤ 1 and 2.0 < z/y < 3.0.

From the viewpoint of further heightening the heat shielding properties of the interlayer film and laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles.

From the viewpoint of further heightening the heat shielding properties of the interlayer film and laminated glass, cesium-doped tungsten oxide particles are especially preferred. From the viewpoint of still further heightening the heat shielding properties of the interlayer film and laminated glass, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, preferably 0.1 µm or less and more preferably 0.05 µm or less. When the average particle diameter is the above lower limit or more, the heat ray shielding properties are sufficiently heightened. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.).

In 100% by weight of the second resin layer, the total content of tin-doped indium oxide particles and tungsten oxide particles is 0.01% by weight or more, preferably 0.1% by weight or more, more preferably 0.30% by weight or more, especially preferably 1% by weight or more, most preferably 1.5% by weight or more, 6% by weight or less, preferably 5.5% by weight or less, more preferably 4% by weight or less, especially preferably 3.5% by weight or less and most preferably 3% by weight or less. When the total content of tin-doped indium oxide particles and tungsten oxide particles is not less than the above lower limit and not more than the above upper limit, the heat shielding properties are sufficiently heightened and the visible light transmittance is sufficiently heightened. Moreover, when the total content of tin-doped indium oxide particles and tungsten oxide particles is not less than the above lower limit and not more than the above upper limit, the heat shielding properties, the excitation purity and the YI value are improved with good balance.

From the viewpoint of effectively lowering the excitation purity and the YI value with good balance, in 100% by weight of the second resin layer, the total content of tin-doped indium oxide particles and tungsten oxide particles is preferably 0.23% by weight or more, more preferably 0.30% by weight or more, further preferably 0.44% by weight or more, preferably 0.88% by weight or less, more preferably 0.85% by weight or less and further preferably 0.83% by weight or less.

It is preferred that the second resin layer contain tin-doped indium oxide particles and tungsten oxide particles in a proportion of 0.1 g/m² or more and 12 g/m² or less in total. When the total proportion of tin-doped indium oxide particles and tungsten oxide particles lies within the above-mentioned range, the heat shielding properties are sufficiently heightened and the visible light transmittance is sufficiently heightened. The total proportion of tin-doped indium oxide particles and tungsten oxide particles is preferably 0.5 g/m² or more, more preferably 0.8 g/m² or more, further preferably 1.5 g/m² or more, especially preferably 3 g/m² or more, preferably 11 g/m² or less, more preferably 10 g/m² or less, further preferably 9 g/m² or less and especially preferably 7 g/m² or less. When the proportion is not less than the above lower limit, the heat shielding properties are further heightened. When the proportion is not more than the above upper limit, the visible light transmittance is further heightened. Moreover, when the proportion is not less than the above lower limit and not more than the above upper limit, the heat shielding properties, the excitation purity and the YI value are improved with good balance.

From the viewpoint of effectively lowering the excitation purity, in 100% by weight of the second resin layer, the content of tungsten oxide particles is preferably 0.001% by weight or more, more preferably 0.005% by weight or more and further preferably 0.01% by weight or more. In 100% by weight of the second resin layer, the content of tungsten oxide particles is 0.04% by weight or less.

The ratio (content of ITO particles/content of CWO particles) of the content (% by weight) of tin-doped indium oxide particles in 100% by weight of the second resin layer to the content (% by weight) of tungsten oxide particles in 100% by weight of the second resin layer is preferably 1 or more, more preferably greater than 5, further preferably 6 or more, especially preferably greater than 8, most preferably 10 or more, preferably 30 or less and more preferably 20 or less. When the ratio (content of ITO particles/content of CWO particles) is not less than the above lower limit and not more than the above upper limit, the heat shielding properties, the excitation purity and the YI value are improved with good balance.

From the viewpoint of effectively lowering the excitation purity and the YI value with good balance, it is preferred that (1) the ratio of the content of tin-doped indium oxide particles in 100% by weight of the second resin layer to the content of tungsten oxide particles in 100% by weight of the second resin layer be greater than 8 or (2) the ratio of the content of tin-doped indium oxide particles in 100% by weight of the second resin layer to the content of tungsten oxide particles in 100% by weight of the second resin layer be greater than 5 and the content of tungsten oxide particles in 100% by weight of the second resin layer be less than 0.1% by weight. It is preferred that the interlayer film be provided with the above-mentioned constitution (1), and it is also preferred that the interlayer film be provided with the above-mentioned constitution (2).

When the first resin layer contains the heat shielding particles, in 100% by weight of the first resin layer, the content of heat shielding particles is preferably 0.01% by weight or more, more preferably 0.1% by weight or more, further preferably 1% by weight or more, especially preferably 1.5% by weight or more, preferably 6% by weight or less, more preferably 5.5% by weight or less, further preferably 4% by weight or less, especially preferably 3.5% by weight or less and most preferably 3% by weight or less. When the content of the heat shielding particles is not less than the above lower limit and not more than the above upper limit, the heat shielding properties are sufficiently heightened and the visible light transmittance is sufficiently heightened.

When the first resin layer contains the heat shielding particles, it is preferred that the first resin layer contain the heat shielding particles in a proportion of 0.1 g/m² or more and 12 g/m² or less. When the proportion of the heat shielding particles lies within the above-mentioned range, the heat shielding properties are sufficiently heightened and the visible light transmittance is sufficiently heightened. The proportion of the heat shielding particles is preferably 0.5 g/m² or more, more preferably 0.8 g/m² or more, further preferably 1.5 g/m² or more, especially preferably 3 g/m² or more, preferably 11 g/m² or less, more preferably 10 g/m² or less, further preferably 9 g/m² or less and especially preferably 7 g/m² or less. When the proportion is the above lower limit or more, the heat shielding properties are further heightened. When the proportion is the above upper limit or less, the visible light transmittance is further heightened.

### (Ultraviolet ray screening agent)

It is preferred that the first resin layer contain an ultraviolet ray screening agent. It is preferred that the second resin layer contain an ultraviolet ray screening agent. It is more preferred that both of the first resin layer and the second resin layer contain an ultraviolet ray screening agent. By the use of an ultraviolet ray screening agent, even when the interlayer film and the laminated glass are used for a long period of time, the visible light transmittance becomes further difficult to be lowered. One kind of the ultraviolet ray screening agent may be used alone, and two or more kinds thereof may be used in combination.

The ultraviolet ray screening agent includes an ultraviolet ray absorber. It is preferred that the ultraviolet ray screening agent be an ultraviolet ray absorber.

Examples of the ray screening agent include a metal-based ultraviolet ray screening agent, a metal oxide-based ultraviolet ray screening agent, a benzotriazole-based ultraviolet ray screening agent (a benzotriazole compound), a benzophenone-based ultraviolet ray screening agent (a benzophenone compound), a triazine-based ultraviolet ray screening agent (a triazine compound), a malonic acid ester-based ultraviolet ray screening agent (a malonic acid ester compound), an oxanilide-based ultraviolet ray screening agent (an oxanilide compound), a benzoate-based ultraviolet ray screening agent (a benzoate compound) e.

Examples of the metal-based ultraviolet ray screening agent include platinum particles, particles in which the surface of platinum particles is coated with silica, palladium particles, particles in which the surface of palladium particles is coated with silica. It is preferred that the ultraviolet ray screening agent not be heat shielding particles.

Examples of the metal oxide-based ultraviolet ray screening agent include zinc oxide, titanium oxide, cerium oxide. Furthermore, regarding the metal oxide-based ultraviolet ray screening agent, the surface thereof may be coated. Examples of a coating material for the surface of the metal oxide-based ultraviolet ray screening agent include an insulating metal oxide, a hydrolyzable organosilicon compound, a silicone compound.

Examples of the insulating metal oxide include silica, alumina, zirconia. For example, the insulating metal oxide has a band-gap energy of 5.0 eV or more.

Examples of the benzotriazole-based ultraviolet ray screening agent include benzotriazole-based ultraviolet ray screening agents such as 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.) and 2-(2'-hydroxy-3',5'-di-amylphenyl)benzotriazole ("Tinuvin 328" available from BASF Japan Ltd.). It is preferred that the benzotriazole-based ultraviolet ray screening agent be a benzotriazole-based ultraviolet ray screening agent containing halogen atoms, and it is more preferred that the ultraviolet ray screening agent be a benzotriazole-based ultraviolet ray screening agent containing chlorine atoms, since those are excellent in ultraviolet ray absorbing performance.

Examples of the benzophenone-based ultraviolet ray screening agent include octabenzone ("Chimassorb 81" available from BASF Japan Ltd.).

Examples of the triazine-based ultraviolet ray screening agent include 2-(4,6-diphenyl-1,3,5-triazine-2-yl)-5-[(hexyl)oxy]-phenol ("Tinuvin 1577FF" available from BASF Japan Ltd.).

Examples of the malonic acid ester-based ultraviolet ray screening agent include dimethyl-2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate.

Examples of a commercial product of the malonic acid ester-based ultraviolet ray screening agent include Hostavin B-CAP, Hostavin PR-25 and Hostavin PR-31 (any of these is available from Clariant Japan K.K.).

Examples of the oxanilide-based ultraviolet ray screening agent include a kind of oxalic acid diamide having a substituted aryl group on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the benzoate-based ultraviolet ray screening agent include 2,4-di-tert-butylphenyl-3,5-di-tert-butyl-4-hydroxybenzoate ("Tinuvin 120" available from BASF Japan Ltd.).

With regard to the interlayer film and laminated glass, in order to suppress the lowering in visible light transmittance thereof after the lapse of a certain period of time, it is preferred that the ultraviolet ray screening agent be 2-(2'-hydroxy-3'-t-butyl-5-methylphenyl)-5-chlorobenzotriazole ("Tinuvin 326" available from BASF Japan Ltd.) or 2-(2'-hydroxy-3',5'-di-amylphenyl)benzotriazole ("Tinuvin 328" available from BASF Japan Ltd.), and the ultraviolet ray screening agent may be 2-(2'-hydroxy-3'-t-butyl-5-methylphenyl)-5-chlorobenzotriazole.

When each of the first and second resin layers contains the ultraviolet ray screening agent, in 100% by weight of each of the first and second resin layers, the content of the ultraviolet ray screening agent is preferably 0.1% by weight or more, more preferably 0.2% by weight or more, further preferably 0.3% by weight or more, especially preferably 0.5% by weight or more, preferably 2.5% by weight or less, more preferably 2% by weight or less, further preferably 1% by weight or less and especially preferably 0.8% by weight or less. When the content of the ultraviolet ray screening agent is the above lower limit or more and the above upper limit or less, the lowering in visible light transmittance after the lapse of time is further suppressed. In particular, by setting the content of the ultraviolet ray screening agent to be 0.2% by weight or more in 100% by weight of the first or second resin layer, with regard to the interlayer film and laminated glass, the lowering in visible light transmittance thereof after the lapse of a certain period of time can be significantly suppressed.

### (Oxidation inhibitor)

It is preferred that the first resin layer contain an oxidation inhibitor. It is preferred that the second resin layer contain an oxidation inhibitor. It is preferred that both of the first resin layer and the second resin layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butylated hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene). One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, tris(2,4-di-t-butylphenyl) phosphite, 2,2'-methylenebis(4,6-di-t-butyl-1-phenyloxy)(2-ethylhexyloxy)phosphorus. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd..

When each of the first and second resin layers contains the oxidation inhibitor, in 100% by weight of each of the first and second resin layers, the content of the oxidation inhibitor is preferably 0.1% by weight or more, preferably 2% by weight or less and more preferably 1.8% by weight or less. When the content of the oxidation inhibitor is the above lower limit or more, with regard to the interlayer film and laminated glass, high visible light transmittance thereof is maintained over a longer period of time. When the content of the oxidation inhibitor is the above upper limit or less, an effect commensurate with the addition of an oxidation inhibitor becomes easy to be attained.

### (Adhesive force regulating agent)

It is preferred that at least one among the first resin layer and the second resin layer contain an adhesive force regulating agent. It is preferred that the first resin layer contain an adhesive force regulating agent. It is preferred that the second resin layer contain an adhesive force regulating agent. It is more preferred that both of the first resin layer and the second resin layer contain an adhesive force regulating agent. By the use of an adhesive force regulating agent, the adhesivity between the interlayer film and a sheet of glass is controlled, and laminated glass which is excellent in penetration resistance is obtained. Furthermore, by containing an adhesive force regulating agent in the first resin layer and the second resin layer, when a falling-ball test as the test for penetration resistance is performed, an effect of enabling glass fragments of laminated glass to become smaller in size is exerted. In particular, when the adhesive force regulating agent is a metal salt, glass fragments of laminated glass become further smaller in size. One kind of the adhesive force regulating agent may be used alone, and two or more kinds thereof may be used in combination.

The adhesive force regulating agent is not particularly limited, it is preferred that the adhesive force regulating agent be a metal salt, and it is preferred that the adhesive force regulating agent be at least one kind of metal salt selected from the group consisting of an alkali metal salt, an alkaline earth metal salt and an Mg salt. It is preferred that the metal salt contain at least one kind of metal among K and Mg. It is more preferred that the metal salt be an alkali metal salt of an organic acid with 2 to 16 carbon atoms or an alkaline earth metal salt of an organic acid with 2 to 16 carbon atoms, and it is further preferred that the metal salt be a magnesium carboxylate with 2 to 16 carbon atoms or a potassium carboxylate with 2 to 16 carbon atoms. Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutanoate, potassium 2-ethylbutanoate, magnesium 2-ethylhexanoate, potassium 2-ethylhexanoate.

The content of the adhesive force regulating agent is not particularly limited. In each of the first resin layer and the second resin layer, with regard to the content of the adhesive force regulating agent relative to 100 parts by weight of the thermoplastic resin, the preferred lower limit is 0.0005 parts by weight and the preferred upper limit is 0.05 parts by weight. When the content of the adhesive force regulating agent is 0.0005 parts by weight or more, the penetration resistance of laminated glass is enhanced. When the content of the adhesive force regulating agent is 0.05 parts by weight or less, the transparency of the interlayer film is further enhanced. The more preferred lower limit of the content of the adhesive force regulating agent is 0.002 parts by weight and the more preferred upper limit thereof is 0.02 parts by weight.

Because the moisture resistance of the first resin layer is enhanced, it is preferred that the total of the contents of the alkali metal, the alkaline earth metal and Mg in each of the first and second resin layers be 300 ppm or less. For example, the alkali metal, the alkaline earth metal and Mg may be contained as metals derived from an adhesive force regulating agent mentioned above and may be contained as metals derived from a neutralizing agent used at the time of synthesizing a polyvinyl acetal resin. It is more preferred that the total of the contents of the alkali metal, the alkaline earth metal and Mg in each of the first and second resin layers be 200 ppm or less, it is further preferred that the total thereof be 150 ppm or less, and it is especially preferred that the total thereof be 100 ppm or less.

### (Other ingredients)

The interlayer film may include additives such as a light stabilizer, a flame retardant, an antistatic agent, a pigment, a dye, a moisture-resistance improving agent and a fluorescent brightening agent, as necessary. One kind of these additives may be used alone, and two or more kinds thereof may be used in combination.

### (Other details of interlayer film for laminated glass)

It is preferred that the interlayer film according to the present invention be arranged between a first laminated glass member and a second laminated glass member to be used.

It is preferred that the interlayer film according to the present invention be used for obtaining laminated glass which is fitted into an opening part between an outer space (first space) and an inner space (second space) into which heat rays are made incident from the outer space for a building or a vehicle. In this case, it is preferred that, among the first and second resin layers, the first resin layer be arranged so as to be positioned at the outer space side.

The thickness of the interlayer film is not particularly limited. From the viewpoint of the practical aspect and the viewpoint of sufficiently heightening the heat shielding properties, the thickness of the interlayer film is preferably 0.1 mm or more, more preferably 0.25 mm or more, preferably 3 mm or less and more preferably 1.5 mm or less. When the thickness of the interlayer film is the above lower limit or more, the penetration resistance of laminated glass is enhanced.

The thickness of the infrared ray reflection layer is preferably 0.01 mm or more, more preferably 0.04 mm or more, further preferably 0.07 mm or more, preferably 0.3 mm or less, more preferably 0.2 mm or less, further preferably 0.18 mm or less and especially preferably 0.16 mm or less. When the thickness of the infrared ray reflection layer is the above lower limit or more, the heat shielding properties of laminated glass are further heightened. When the thickness of the infrared ray reflection layer is the above upper limit or less, the transparency of laminated glass is further enhanced.

The thickness of each of the first and second resin layers is preferably 0.1 mm or more, more preferably 0.2 mm or more, further preferably 0.25 mm or more, especially preferably 0.3 mm or more, preferably 1.0 mm or less, more preferably 0.6 mm or less, still more preferably 0.5 mm or less, further preferably 0.45 mm or less and especially preferably 0.4 mm or less. When the thickness of the first or second resin layer is the above lower limit or more, the penetration resistance of laminated glass is further enhanced. When the thickness of the first or second resin layer is the above upper limit or less, the transparency of laminated glass is further enhanced.

The production method of the interlayer film is not particularly limited. As the production method of the interlayer film, a conventionally known method can be used. Examples thereof include a production method of kneading respective ingredients described above and forming the kneaded product into an interlayer film. A production method of extrusion-molding is preferred because the method is suitable for continuous production. In particular, it is preferred that the first and second resin layers be formed by extrusion molding.

The method for kneading is not particularly limited. Examples of this method include a method using an extruder, a plastograph, a kneader, a banbury mixer, a calender roll. Of these, a method using an extruder is preferred and a method using a twin screw extruder is more preferred because the methods are suitable for continuous production.

In this connection, at the time of obtaining the interlayer film, a first resin layer, an infrared ray reflection layer and a second resin layer are separately prepared, after which the first resin layer, the infrared ray reflection layer and the second resin layer may be layered to obtain an interlayer film, and the layering method is not particularly limited. Examples of the layering method include a heat lamination method.

Moreover, a first resin layer, an infrared ray reflection layer and a second resin layer may be layered by coextrusion to obtain an interlayer film. Moreover, a first resin layer and an infrared ray reflection layer may be coextruded to prepare a coextruded product and a second resin layer may be layered on the infrared ray reflection layer side of the coextruded product to obtain an interlayer film. A second resin layer and an infrared ray reflection layer may be coextruded to prepare a coextruded product and a first resin layer may be layered on the infrared ray reflection layer side of the coextruded product to obtain an interlayer film.

Moreover, by coating compositions for forming first and second resin layers on surfaces of the infrared ray reflection layer, the first and second resin layers may be formed to obtain an interlayer film.

Because the interlayer film is excellent in production efficiency, it is preferred that respective polyvinyl acetal resins contained in the first resin layer and the second resin layer be the same as each other, and it is more preferred that respective polyvinyl acetal resins contained therein be the same as each other and respective plasticizers contained therein be the same as each other.

### (Laminated glass)

The laminated glass according to the present invention is provided with a first laminated glass member, a second laminated glass member and an interlayer film arranged between the first and second laminated glass members. The interlayer film is the above-described interlayer film for laminated glass. The first laminated glass member is arranged on the outside of the first resin layer in the interlayer film. The second laminated glass member is arranged on the outside of the second resin layer in the interlayer film.

It is preferred that the laminated glass according to the present invention be laminated glass which is fitted into an opening part between an outer space and an inner space into which heat rays are made incident from the outer space for a building or a vehicle. In this case, it is preferred that, among the first and second laminated glass members, the first laminated glass member be arranged so as to be positioned at the outer space side.

Fig. 2 shows an example of laminated glass prepared with an interlayer film for laminated glass in accordance with one embodiment of the present invention represented as a sectional view.

Laminated glass 11 shown in Fig. 2 is provided with an interlayer film 1 and first and second laminated glass members 21 and 22. The interlayer film 1 is sandwiched between the first and second laminated glass members 21 and 22. The first laminated glass member 21 is layered on a first surface 1a of the interlayer film 1. The second laminated glass member 22 is layered on a second surface 1b opposite to the first surface 1a of the interlayer film 1. The first laminated glass member 21 is layered on an outer surface 3a of a first resin layer 3 in the interlayer film 1. The second laminated glass member 22 is layered on an outer surface 4a of a second resin layer 4 in the interlayer film 1.

It is preferred that the infrared ray transmittance in the wavelength of 780 to 2100 nm of the first laminated glass member be higher than the infrared ray transmittance in the wavelength of 780 to 2100 nm of the second laminated glass member. In this case, the first laminated glass member transmits a relatively large quantity of infrared rays. Furthermore, most of the infrared rays transmitted through the first laminated glass member are also transmitted through the first resin layer. As such, most of the infrared rays transmitted through the first laminated glass member and the first resin layer reach the infrared ray reflection layer. Infrared rays which have reached the infrared ray reflection layer are reflected by the infrared ray reflection layer. Moreover, because the infrared ray transmittance of the first laminated glass member and the first resin layer is high, most of the infrared rays reflected by the infrared ray reflection layer are transmitted through the first resin layer and the first laminated glass member. As a result, a rise in the temperature of laminated glass at the time when infrared rays are made incident into the laminated glass can be suppressed. As such, the heat shielding properties of the laminated glass are heightened, and furthermore, high visible light transmittance can be maintained over a long period of time since the laminated glass is excellent in light resistance. Moreover, by fitting the laminated glass into an opening part of a building or a vehicle, a rise in the temperature of an inner space of a building or a vehicle can be effectively suppressed.

On the other hand, if the first laminated glass member, the first resin layer and the infrared ray reflection layer transmit a part of infrared rays at all, the transmitted infrared rays reach the second resin layer. Since the infrared ray transmittance of the second resin layer is relatively low, the second resin layer effectively cuts off the transmission of infrared rays. Furthermore, since the infrared ray transmittance of the second laminated glass member is also relatively low, the second laminated glass member effectively cuts off the transmission of infrared rays. As such, the quantity of heat rays passing through the whole laminated glass can be reduced. This also enables the heat shielding properties of laminated glass to be heightened, and by fitting the laminated glass into an opening part of a building or a vehicle, a rise in the temperature of an inner space of a building or a vehicle can be effectively suppressed.

When the infrared ray transmittance in the wavelength of 780 to 2100 nm of a first laminated glass member is defined as Ty1 and the infrared ray transmittance in the wavelength of 780 to 2100 nm of a second laminated glass member is defined as Ty2. It is preferred that Ty1 be higher than Ty2. Because the heat shielding properties of laminated glass are further heightened, it is preferred that Ty1 be higher by 10% or more than Ty2, it is more preferred that Ty1 be higher by 15% or more than Ty2 and it is further preferred that Ty1 be higher by 20% or more than Ty2. Although the upper limit of a value of (Ty1 - Ty2) is not particularly limited, because the transparency of laminated glass is further enhanced, it is preferred that (Ty1 - Ty2) be 50% or less, it is more preferred that (Ty1 - Ty2) be 40% or less, it is further preferred that (Ty1 - Ty2) be 30% or less and it is especially preferred that (Ty1 - Ty2) be 25% or less. For the purpose of further enhancing the heat shielding properties and transparency of laminated glass, the preferred lower limit of Ty1 is 50%, the preferred upper limit thereof is 90%, the more preferred lower limit thereof is 55%, the more preferred upper limit thereof is 88%, the further preferred lower limit thereof is 60% and the further preferred upper limit thereof is 86%. Moreover, for the purpose of further enhancing the heat shielding properties and transparency of laminated glass, the preferred lower limit of Ty2 is 40%, the preferred upper limit thereof is 88%, the more preferred lower limit thereof is 45%, the more preferred upper limit thereof is 86%, the further preferred lower limit thereof is 55%, the further preferred upper limit thereof is 70%, the especially preferred lower limit thereof is 60% and the especially preferred upper limit thereof is 65%.

When the infrared ray transmittance in the wavelength of 780 to 2100 nm of the whole layer composed of a first laminated glass member and a first resin layer is defined as T1 and the infrared ray transmittance in the wavelength of 780 to 2100 nm of the whole layer composed of a second laminated glass member and a second resin layer is defined as T2. It is preferred that T1 be higher than T2. In this case, the heat shielding properties of laminated glass are heightened. Because the heat shielding properties of laminated glass are further heightened, it is preferred that T1 be higher by 10% or more than T2, it is more preferred that T1 be higher by 20% or more than T2, it is still more preferred that T1 be higher by 30% or more than T2, it is further preferred that T1 be higher by 40% or more than T2, it is still further preferred that T1 be higher by 50% or more than T2 and it is especially preferred that T1 be higher by 60% or more than T2. Although the upper limit of a value of (T1 - T2) is not particularly limited, because the transparency of laminated glass is further enhanced, it is preferred that (T1 - T2) be 90% or less, it is more preferred that (T1 - T2) be 85% or less and it is further preferred that (T1 - T2) be 80% or less.

In this connection, the infrared ray transmittance T1 in the wavelength of 780 to 2100 nm of the whole layer composed of a first laminated glass member and a first resin layer is measured in the following manner.

Laminated glass in which a first laminated glass member, a first resin layer and a sheet of clear glass (2.5 mm in thickness) are layered in this order is prepared. Weighting factors in the range of 780 to 2100 nm among weighting factors in the range of 300 to 2100 nm shown in Appendix Table 2 in JIS R3106 (1998) are used, and each of weighting factors in the range of 780 to 2100 nm is divided by the total value of weighting factors in the range of 780 to 2100 nm to obtain a newly normalized weighting factor of the infrared ray transmittance in the range of 780 to 2100 nm. Then, the spectral transmittance in the wavelength of 780 to 2100 nm of a sheet of laminated glass is obtained in accordance with JIS R3106 (1998) using a spectrophotometer ("U-4100" available from Hitachi High-Technologies Corporation). The spectral transmittance obtained is multiplied by the newly normalized weighting factor to calculate the infrared ray transmittance T1 in the wavelength of 780 to 2100 nm.

In the measurement for the infrared ray transmittance T1, by substituting a second laminated glass member and a second resin layer for the first laminated glass member and the first resin layer, the infrared ray transmittance T2 in the wavelength of 780 to 2100 nm of the whole layer composed of the second laminated glass member and the second resin layer can be measured.

Examples of the first and second laminated glass members include a glass plate and a PET (polyethylene terephthalate) film. As the laminated glass, laminated glass in which an interlayer film is sandwiched between a glass plate and a PET film, as well as laminated glass in which an interlayer film is sandwiched between two glass plates, is included. Laminated glass is a laminate provided with a glass plate, and it is preferred that at least one glass plate be used. It is preferred that each of the first and second laminated glass members be a glass plate or a PET (polyethylene terephthalate) film and the interlayer film include at least one glass plate as the first or second laminated glass member. It is especially preferred that both of the first and second laminated glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, net-reinforced plate glass, wired plate glass, green glass. The organic glass is synthetic resin glass substituted for inorganic glass. Examples of the organic glass include a polycarbonate plate, a poly(meth)acrylic resin plate. Examples of the poly(meth)acrylic resin plate include a polymethyl (meth)acrylate plate.

It is preferred that the first laminated glass member and the second laminated glass member be each a sheet of clear glass or a sheet of heat ray-absorbing plate glass. Because the infrared ray transmittance is heightened and the heat shielding properties of laminated glass are further heightened, it is preferred that the first laminated glass member be a sheet of clear glass. Because the infrared ray transmittance is lowered and the heat shielding properties of laminated glass are further heightened, it is preferred that the second laminated glass member be a sheet of heat ray-absorbing plate glass. It is preferred that the heat ray-absorbing plate glass be green glass. It is preferred that the first laminated glass member be a sheet of clear glass and the second laminated glass member be a sheet of heat ray-absorbing plate glass. The heat ray-absorbing plate glass is heat ray-absorbing plate glass in accordance with JIS R3208.

Although the thickness of the first or second laminated glass member is not particularly limited, the thickness is preferably 1 mm or more and preferably 5 mm or less. When the laminated glass member is a glass plate, the thickness of the glass plate is preferably 1 mm or more and preferably 5 mm or less. When the laminated glass member is a PET film, the thickness of the PET film is preferably 0.03 mm or more and preferably 0.5 mm or less.

The production method of the laminated glass is not particularly limited. For example, an interlayer film mentioned above is sandwiched between the first and second laminated glass members, and the air remaining between the first or second laminated glass member and the interlayer film is removed by passing the members through a pressing roll or by putting the members into a rubber bag to be sucked under reduced pressure. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The laminated glass can be used for automobiles, railway vehicles, aircraft, ships, buildings. It is preferred that the laminated glass be laminated glass for building or for vehicles, and it is more preferred that the laminated glass be laminated glass for vehicles. The interlayer film and the laminated glass can also be used for applications other than these applications. The interlayer film and the laminated glass can be used for a windshield, side glass, rear glass or roof glass of an automobile. Since the interlayer film and the laminated glass are high in heat shielding properties and high in visible light transmittance, the interlayer film and the laminated glass are suitably used for automobiles.

From the viewpoint of obtaining laminated glass further excellent in transparency, the visible light transmittance of laminated glass is preferably 60% or more, more preferably 65% or more and further preferably 70% or more. The visible light transmittance of laminated glass can be measured in accordance with JIS R3211 (1998). The visible light transmittance of laminated glass obtained by sandwiching the interlayer film for laminated glass according to the present invention between two sheets of green glass with a thickness of 2 mm in accordance with JIS R3208 is preferably 60% or more, more preferably 65% or more and further preferably 70% or more. The visible light transmittance of laminated glass obtained by sandwiching the interlayer film for laminated glass according to the present invention between two sheets of clear glass with a thickness of 2.5 m is preferably 60% or more, more preferably 65% or more and further preferably 70% or more.

From the viewpoint of obtaining laminated glass further excellent in heat shielding properties, each of the Tts of laminated glass obtained by sandwiching the interlayer film for laminated glass according to the present invention between two sheets of green glass with a thickness of 2 mm in accordance with JIS R3208 and the Tts of the laminated glass according to the present invention is preferably 60% or less, more preferably 55% or less, further preferably 53% or less, especially preferably 51% or less and most preferably 50% or less. From the viewpoint of obtaining laminated glass further excellent in heat shielding properties, the Tts of laminated glass obtained by sandwiching the interlayer film for laminated glass according to the present invention between two sheets of clear glass with a thickness of 2.5 mm is preferably 60% or less, more preferably 55% or less, further preferably 53% or less, especially preferably 51% or less and most preferably 50% or less. The Tts is measured in accordance with ISO 13837.

The haze value of laminated glass is preferably 2% or less, more preferably 1% or less, further preferably 0.5% or less and especially preferably 0.4% or less. The haze value of laminated glass can be measured in accordance with JIS K6714.

### (Method for fitting laminated glass)

The method for fitting laminated glass according to the present invention is a method for fitting the above-described laminated glass for a building or a vehicle into an opening part between an outer space and an inner space into which heat rays are made incident from the outer space.

Specifically, the laminated glass is fitted into an opening part so that the first laminated glass member is positioned at the outer space side and the second laminated glass member is positioned at the inner space side. That is, the laminated glass is fitted so that an arrangement order of the outer space/a first laminated glass member/(another layer/)a first resin layer/(another layer/)an infrared ray reflection layer/(another layer/)a second resin layer/(another layer/)a second laminated glass member/the inner space is attained. Preferably, it is preferred that an arrangement order of the outer space/a first laminated glass member/a first resin layer/(another layer/)an infrared ray reflection layer/(another layer/)a second resin layer/a second laminated glass member/the inner space be attained, it is preferred that an arrangement order of the outer space/a first laminated glass member/(another layer/)a first resin layer/an infrared ray reflection layer/a second resin layer/(another layer/)a second laminated glass member/the inner space be attained, and it is preferred that an arrangement order of the outer space/a first laminated glass member/a first resin layer/an infrared ray reflection layer/a second resin layer/a second laminated glass member/the inner space be attained. In the above-mentioned arrangement forms, the case where another member is arranged between the outer space and the first laminated glass member is included, and the case where another member is arranged between the inner space and the second laminated glass member is included.

In the layered structure, each of another layer mentioned above and another member mentioned above may be present or may be absent. Sunlight containing heat rays is made incident into laminated glass from an outer space, and the sunlight containing heat rays, which has passed through the laminated glass, is led to an inner space. When laminated glass is fitted into an opening part as mentioned above, the outer surface of the first laminated glass member constitutes the incident face for heat rays. Moreover, heat rays are made incident into the first resin layer earlier than the second resin layer.

Hereinafter, the present invention will be described in more detail with reference to examples.

The following materials were used to form first and second resin layers.

### Thermoplastic resin:

A polyvinyl butyral resin PVB1 (a polyvinyl butyral resin (PVB) acetalized with n-butyraldehyde) and a polyvinyl butyral resin PVB2 (a polyvinyl butyral resin (PVB) acetalized with n-butyraldehyde) shown in the following Table 1 were prepared.

**[Table 1]**

| Kind of thermoplastic resin | Average polymerization degree | Content of hydroxyl group (mol%) | Acetylation degree (mol%) | Butyralization degree (mol%) |
|---|---|---|---|---|
| PVB1 | 1700 | 30.5 | 1 | 68.5 |
| PVB2 | 2300 | 22 | 13 | 65 |

### Plasticizer:

### 3GO (triethylene glycol di-2-ethylhexanoate)

### Heat shielding compound:

ITO (ITO particles, tin-doped indium oxide particles)
CWO (CWO particles, cesium-doped tungsten oxide (CS_{0.33}WO₃) particles)
43V (Ingredient X, a phthalocyanine compound, "NIR-43V" available from YAMADA CHEMICAL CO., LTD. which contains a vanadium atom as the central metal)

### Other ingredients:

T-326 (an ultraviolet ray screening agent, 2-(2'-hydroxy-3'-t-butyl-5-methylphenyl)-5-chlorobenzotriazole, "Tinuvin 326" available from BASF Japan Ltd.)
BHT (an oxidation inhibitor, 2,6-di-t-butyl-p-cresol)
A metal salt (an adhesive force regulating agent, magnesium acetate tetrahydrate)

Moreover, the following infrared ray reflection layers were prepared.

### Nano 90S (3M, a multilayer resin film, "Multilayer Nano 90S" available from 3M Japan Limited)

Moreover, the following laminated glass members (sheets of glass) were prepared.

Clear glass (30 cm in longitudinal length by 30 cm in transversal length by 2.5 mm in thickness)
Green glass (heat ray-absorbing plate glass in accordance with JIS R3208, 30 cm in longitudinal length by 30 cm in transversal length by 2 mm in thickness)

### (Preparation of resin layer A1)

To 100 parts by weight of a polyvinyl butyral resin (PVB1), 36 parts by weight of a plasticizer (3GO), 0.2 parts by weight of an ultraviolet ray screening agent (T-326), 0.2 parts by weight of an oxidation inhibitor (BHT) and magnesium acetate tetrahydrate in an amount that the metal element concentration becomes 45.6 ppm in the resulting resin layer A1 were added and thoroughly kneaded with a mixing roll to obtain a composition.

The composition obtained was extruded by an extruder to obtain a single-layered resin layer A1 with a thickness of 380 µm.

### (Preparation of resin layer A2)

To 100 parts by weight of a polyvinyl butyral resin (PVB1), 36 parts by weight of a plasticizer (3GO), 0.2 parts by weight of an ultraviolet ray screening agent (T-326), 0.2 parts by weight of an oxidation inhibitor (BHT) and magnesium acetate tetrahydrate in an amount that the metal element concentration becomes 45.6 ppm in the resulting surface layer were added and thoroughly kneaded with a mixing roll to obtain a composition for a surface layer.

To 100 parts by weight of a polyvinyl butyral resin (PVB2), 60 parts by weight of a plasticizer (3GO) was added and thoroughly kneaded with a mixing roll to obtain a composition for a core layer.

The composition for a surface layer and the composition for a core layer were coextruded by an extruder to obtain a multi-layered resin layer A2 with a thickness of 800 µm. The resin layer A2 obtained has a layered structure with a stack of a surface layer (350 µm in thickness)/a core layer (100 µm in thickness)/a surface layer (350 µm in thickness).

**[Table 2]**

| Kind of first resin layer | Composition of first resin layer | | | | | | | | | | | |
|---|---|---|---|---|---|---|---|---|---|---|---|---|
| | Surface layer | | | | | | Core layer | | | | | |
| | PVB | | 3GO | T-326 | BHT | Metal salt | PVB | | 3GO | T-326 | BHT | Metal salt |
| | Kind | Parts by weight | Parts by weight | Parts by weight | Parts by weight | ppm | Kind | Parts by weight | Parts by weight | Parts by weight | Parts by weight | ppm |
| A1 | PVB1 | 100 | 36 | 0.2 | 0.2 | 45.6 | - | - | - | - | - | - |
| A2 | PVB1 | 100 | 36 | 0.2 | 0.2 | 45.6 | PVB2 | 100 | 60 | - | - | - |

### (Preparation of resin layer B1)

To 40 parts by weight of a plasticizer (3GO), heat shielding particles (ITO) in an amount that the content thereof in the resulting resin layer B1 becomes 0.4% by weight, heat shielding particles (CWO) in an amount that the content thereof in the resulting resin layer B1 becomes 0.04% by weight and an Ingredient X (43V) in an amount that the content thereof in the resulting resin layer B1 becomes 0.008% by weight were added and mixed to obtain a plasticizer dispersion.

To 100 parts by weight of a polyvinyl butyral resin (PVB1), the whole amount of the plasticizer dispersion, 0.8 parts by weight of an ultraviolet ray screening agent (T-326), 0.2 parts by weight of an oxidation inhibitor (BHT) and magnesium acetate tetrahydrate in an amount that the metal element concentration becomes 94.3 ppm in the resulting resin layer B1 were added and thoroughly kneaded with a mixing roll to obtain a composition.

The composition obtained was extruded by an extruder to obtain a single-layered resin layer B1 with a thickness of 380 µm.

(Preparation of resin layers B2 to B18) Single-layered resin layers B2 to B18 with a thickness of 380 µm were prepared in the same manner as that for the resin layer B1 except that the kind of ingredients to be blended and the content thereof were set to those listed in the following Table 3.

**[Table 3]**

| Kind of second resin layer | Composition of second resin layer | | | | | | | | | |
|---|---|---|---|---|---|---|---|---|---|---|
| | PVB1 | 3GO | T-326 | BHT | ITO | CWO | ITO + CWO | ITO / CWO | 43V | Metal salt |
| | Parts by weight | Parts by weight | Parts by weight | Parts by weight | % by weight | % by weight | % by weight | - | % by weight | ppm |
| B1 | 100 | 40 | 0.8 | 0.2 | 0.4 | 0.04 | 0.44 | 10.0 | 0.008 | 94.3 |
| B2 | 100 | 40 | 0.8 | 0.2 | 0.8 | 0.04 | 0.84 | 20.0 | 0.004 | 94.3 |
| B3 | 100 | 40 | 0.8 | 0.2 | 0.833 | 0.04 | 0.873 | 20.8 | 0.009 | 94.3 |
| B4 | 100 | 40 | 0.8 | 0.2 | 0.833 | - | 0.833 | - | 0.009 | 94.3 |
| B5 | 100 | 40 | 0.8 | 0.2 | 0.833 | - | 0.833 | - | - | 94.3 |
| B6 | 100 | 40 | 0.8 | 0.2 | - | - | - | - | - | 94.3 |
| B7 | 100 | 40 | 0.8 | 0.2 | 0.66 | 0.01 | 0.67 | 66.0 | 0.009 | 94.3 |
| B8 | 100 | 40 | 0.8 | 0.2 | 0.51 | 0.02 | 0.53 | 25.5 | 0.009 | 94.3 |
| B9 | 100 | 40 | 0.8 | 0.2 | 0.28 | 0.04 | 0.32 | 7.0 | 0.009 | 94.3 |
| B10 | 100 | 40 | 0.8 | 0.2 | 0.28 | 0.04 | 0.32 | 7.0 | 0.007 | 94.3 |
| B11 | 100 | 40 | 0.8 | 0.2 | 0.28 | 0.04 | 0.32 | 7.0 | 0.005 | 94.3 |
| B12 | 100 | 40 | 0.8 | 0.2 | 0.28 | 0.04 | 0.32 | 7.0 | 0.003 | 94.3 |
| B13 | 100 | 40 | 0.8 | 0.2 | 0.5 | 0.04 | 0.54 | 12.5 | 0 | 94.3 |
| B14 | 100 | 40 | 0.8 | 0.2 | 0.23 | 0.04 | 0.27 | 5.8 | 0.01 | 94.3 |
| B15 | 100 | 40 | 0.8 | 0.2 | 0.19 | 0.04 | 0.23 | 4.8 | 0.011 | 94.3 |
| B16 | 100 | 40 | 0.8 | 0.2 | 0.2 | 0.04 | 0.24 | 5.0 | 0.007 | 94.3 |
| B17 | 100 | 40 | 0.8 | 0.2 | 0.2 | 0.04 | 0.24 | 5.0 | 0.005 | 94.3 |
| B18 | 100 | 40 | 0.8 | 0.2 | 0.2 | 0.04 | 0.24 | 5.0 | 0.003 | 94.3 |

In this connection, in the foregoing Table 3, the amounts of 3GO, T-326 and BHT blended refer to the blending amounts thereof (parts by weight) relative to 100 parts by weight of the polyvinyl butyral resin (PVB). The amounts of ITO, CWO and 43V blended refer to the blending amounts thereof (% by weight) in 100% by weight of the resin layer. The amount of a metal salt blended refers to the metal element concentration in the resin layer.

### (Example 1)

### (1) Preparation of interlayer film for laminated glass

As an infrared ray reflection layer, the Nano 90S (3M, a multilayer resin film, "Multilayer Nano 90S" available from 3M Japan Limited) was prepared. The spectral transmittance of each wavelength in the wavelength of 800 to 2000 nm of the infrared ray reflection layer was obtained in accordance with JIS R3106 (1998) using a spectrophotometer ("U-4100" available from Hitachi High-Technologies Corporation). The infrared ray reflection layer exhibited the minimum spectral transmittance of 1.6% at a wavelength of 900 nm and exhibited the maximum spectral transmittance of 91% at a wavelength of 800 nm.

The Nano 90S prepared was used as an infrared ray reflection layer and the infrared ray reflection layer was sandwiched between a resin layer A1 obtained and a resin layer B1 obtained to obtain an interlayer film.

### (2) Preparation of laminated glass

The interlayer film obtained was cut into a size of 30 cm in longitudinal length by 30 cm in transversal length. Moreover, two sheets of clear glass (30 cm in longitudinal length by 30 cm in transversal length by 2.5 mm in thickness) were prepared. The interlayer film obtained was sandwiched between the two sheets of clear glass, held in place for 30 minutes at 90°C and pressed under vacuum with a vacuum laminator to obtain a laminate. With regard to the laminate, interlayer film portions protruded from the glass plate were cut away to obtain a sheet of laminated glass.

### (Examples 2 to 22 and Comparative Examples 1 to 7)

Interlayer films and sheets of laminated glass were prepared in the same manner as that in Example 1 except that the kind of first and second resin layers, the kind of an infrared ray reflection layer and the kind of first and second laminated glass members were set to those listed in the following Table 4. In this connection, in Comparative Examples 1 and 3, without using an infrared ray reflection layer, a first resin layer and a second resin layer were layered to obtain an interlayer film.

### (Evaluation)

### (1) Measurement of visible light transmittance (A light Y value, A-Y (380 to 780 nm))

The laminated glass obtained was measured for the visible light transmittance in the wavelength of 380 to 780 nm in accordance with JIS R3211 (1988) using a spectrophotometer ("U-4100" available from Hitachi High-Technologies Corporation). In this connection, it is preferred that the visible light transmittance be 70% or more.

### (2) Measurement of Tts (Total solar energy transmitted through a glazing)

The transmittance/reflectance in the wavelength of 300 to 2500 nm was measured using a spectrophotometer ("U-4100" available from Hitachi High-Technologies Corporation) in accordance with ISO 13837 to calculate the Tts. In this connection, it is preferred that the Tts be 55% or less.

### (3) C light YI value

The sheet of laminated glass obtained was measured for the yellowness index (the yellow index (YI) value) by a transmission method in accordance with JIS 7105 using a spectrophotometer ("U-4100" available from Hitachi High-Technologies Corporation). In this connection, it is preferred that the YI value be 12 or less.

### (4) Excitation purity

The sheet of laminated glass obtained was measured for the chromaticity by a transmission method in accordance with JIS 8701 using a spectrophotometer ("U-4100" available from Hitachi High-Technologies Corporation) to calculate the excitation purity. In this connection, it is preferred that the excitation purity be 8.5 or less.

### (5) Haze value

The haze value was measured in accordance with JIS K6714 using a haze meter ("TC-H III DPK" available from Tokyo Denshoku Co., Ltd.). In this connection, it is preferred that the haze value be 1.0% or less.

The layered configuration of laminated glass and evaluation results are shown in the following Table 4.

**[Table 4]**

| | Layered configuration | | | | | Content in second resin layer | | | | | Evaluation | | | | |
|---|---|---|---|---|---|---|---|---|---|---|---|---|---|---|---|
| | First laminated glass member | First resin layer | Infrared ray reflection layer | Second resin layer | Second laminated glass member | ITO (% by weight) | CWO (% by weight) | ITO + CWO (% by weight) | ITO / CWO (-) | Ingredient X (%byweight) | A-Y (%) | Tts (%) | C light YI value | Excitation purity | Haze value (%) |
| Ex. 1 | Clear | A1 | nano90S | B1 | Clear | 0.4 | 0.04 | 0.44 | 10 | 0.008 | 81.3 | 53.7 | 12.0 | 7.9 | 0.52 |
| Ex. 2 | Clear | A1 | nano90S | B2 | Clear | 0.8 | 0.04 | 0.84 | 20 | 0.004 | 80.5 | 53.7 | 10.0 | 6.5 | 0.52 |
| Ex. 3 | Clear | A1 | nano90S | B3 | Clear | 0.833 | 0.04 | 0.8732 | 20.83 | 0.009 | 79.3 | 52.2 | 11.3 | 7.7 | 0.56 |
| Ex. 4 | Clear | A1 | nano90S | B1 | Green | 0.4 | 0.04 | 0.44 | 10 | 0.008 | 77.2 | 50.4 | 11.4 | 8.3 | 0.74 |
| Ex. 5 | Clear | A1 | nano90S | B2 | Green | 0.8 | 0.04 | 0.84 | 20 | 0.004 | 76.5 | 50.4 | 7.5 | 5.7 | 0.56 |
| Ex. 6 | Clear | A1 | nano90S | B3 | Green | 0.833 | 0.04 | 0.8732 | 20.83 | 0.009 | 75.1 | 49.1 | 9.9 | 7.4 | 0.61 |
| Ex. 7 | Green | A1 | nano90S | B1 | Green | 0.4 | 0.04 | 0.44 | 10 | 0.008 | 73.0 | 49.4 | 9.4 | 7.6 | 0.47 |
| Ex. 8 | Green | A1 | nano90S | B2 | Green | 0.8 | 0.04 | 0.84 | 20 | 0.004 | 72.2 | 49.4 | 6.8 | 6.0 | 0.60 |
| Ex. 9 | Green | A1 | nano90S | 83 | Green | 0.833 | 0.04 | 0.8732 | 20.83 | 0.009 | 71.2 | 48.3 | 9.0 | 7.4 | 0.58 |
| Ex. 10 | Clear | A1 | nano90S | B7 | Green | 0.66 | 0.01 | 0.67 | 66 | 0.009 | 76.4 | 50.4 | 8.3 | 5.9 | 0.48 |
| Ex. 11 | Clear | A1 | nano90S | B8 | Green | 0.51 | 0.02 | 0.53 | 25.5 | 0.009 | 77.0 | 50.7 | 7.0 | 5.1 | 0.55 |
| Ex. 12 | Clear | A1 | nano90S | B9 | Green | 0.28 | 0.04 | 0.32 | 7 | 0.009 | 77.1 | 50.7 | 6.2 | 4.7 | 0.60 |
| Ex. 13 | Clear | A1 | nano90S | B10 | Green | 0.28 | 0.04 | 0.32 | 7 | 0.007 | 76.5 | 51.3 | 4.7 | 3.9 | 0.68 |
| Ex. 14 | Clear | A1 | nano90S | B11 | Green | 0.28 | 0.04 | 0.32 | 7 | 0.005 | 77.1 | 51.7 | 3.5 | 3.1 | 0.67 |
| Ex. 15 | Clear | A1 | nano90S | B12 | Green | 0.28 | 0.04 | 0.32 | 7 | 0.003 | 77.5 | 52.4 | 3.0 | 2.7 | 0.59 |
| Ex. 16 | Clear | A1 | nano90S | B13 | Green | 0.50 | 0.04 | 0.54 | 12.5 | 0 | 77.1 | 52.7 | 1.9 | 1.9 | 0.71 |
| Ex. 17 | Clear | A1 | nano90S | B14 | Green | 0.23 | 0.04 | 0.27 | 5.8 | 0.01 | 76.8 | 50.6 | 6.4 | 5.0 | 0.58 |
| Ex. 18 | Clear | A1 | nano90S | B15 | Green | 0.19 | 0.04 | 0.23 | 4.8 | 0.011 | 76.9 | 50.8 | 6.6 | 5.2 | 0.58 |
| Ex. 19 | Clear | A1 | nano90S | B16 | Green | 0.2 | 0.04 | 0.24 | 5.0 | 0.009 | 76.8 | 51.5 | 4.5 | 3.8 | 0.60 |
| Ex. 20 | Clear | A1 | nano90S | B17 | Green | 0.2 | 0.04 | 0.24 | 5.0 | 0.005 | 77.2 | 52.0 | 4.1 | 3.3 | 0.56 |
| Ex. 21 | Clear | A1 | nano90S | B18 | Green | 0.2 | 0.04 | 0.24 | 5.0 | 0.003 | 77.9 | 53.0 | 2.6 | 2.5 | 0.71 |
| Ex. 22 | Clear | A2 | nano90S | B9 | Green | 0.28 | 0.04 | 0.32 | 7 | 0.009 | 76.4 | 50.6 | 6.3 | 4.7 | 0.55 |
| Comp.Ex. 1 | Clear | A1 | - | B6 | Clear | - | - | - | - | - | 88.8 | 84.1 | 0.6 | 1.6 | 0.40 |
| Comp.Ex. 2 | Clear | A1 | nano90S | B6 | Clear | - | - | - | - | - | 85.9 | 66.9 | 4.0 | 2.6 | 1.00 |
| Comp.Ex. 3 | Clear | A1 | - | B4 | Clear | 0.833 | - | - | - | 0.009 | 82.6 | 64.4 | 5.3 | 3.8 | 0.32 |
| Comp.Ex. 4 | Clear | A1 | nano90S | B4 | Clear | 0.833 | - | - | - | 0.009 | 81.5 | 54.0 | 14.8 | 9.6 | 0.63 |
| Comp.Ex. 5 | Clear | A1 | nano90S | B4 | Green | 0.833 | - | - | - | 0.009 | 77.1 | 50.4 | 13.4 | 9.5 | 0.63 |
| Comp.Ex. 6 | Green | A1 | nano90S | B4 | Green | 0.833 | - | - | - | 0.009 | 72.8 | 49.4 | 12.4 | 9.4 | 0.62 |
| Comp.Ex. 7 | Clear | A1 | nano90S | B5 | Green | 0.833 | - | - | - | - | 80.9 | 56.7 | 3.6 | 2.6 | 0.80 |

### EXPLANATION OF SYMBOLS

1: Interlayer film
1a: First surface
1b: Second surface
2: Infrared ray reflection layer
2a: First surface
2b: Second surface
3: First resin layer
3a: Outer surface
4: Second resin layer
4a: Outer surface
11: Laminated glass
21: First laminated glass member
22: Second laminated glass member

## Claims

1. An interlayer film for laminated glass, comprising an infrared ray reflection layer for reflecting infrared rays, a first resin layer containing a thermoplastic resin and a second resin layer containing a thermoplastic resin,
the first resin layer being arranged on a first surface side of the infrared ray reflection layer,
the second resin layer being arranged on a second surface side opposite to the first surface of the infrared ray reflection layer,
wherein the second resin layer contains both of tin-doped indium oxide particles and tungsten oxide particles, the content of the tungsten particles in 100% by weight of the second resin layer is 0.04% by weight or less, and the total content of the tin-doped indium oxide particles and the tungsten oxide particles in 100% by weight of the second resin layer is 0.01% by weight or more and 6% by weight or less.

2. The interlayer film for laminated glass according to claim 1, wherein the ratio of the content of the tin-doped indium oxide particles in 100% by weight of the second resin layer to the content of the tungsten oxide particles in 100% by weight of the second resin layer is greater than 8.

3. The interlayer film for laminated glass according to claim 1, wherein the ratio of the content of the tin-doped indium oxide particles in 100% by weight of the second resin layer to the content of the tungsten oxide particles in 100% by weight of the second resin layer is greater than 5.

4. The interlayer film for laminated glass according to claim 1, wherein the ratio of the content of the tin-doped indium oxide particles in 100% by weight of the second resin layer to the content of the tungsten oxide particles in 100% by weight of the second resin layer is 1 or more and 30 or less.

5. The interlayer film for laminated glass according to any one of claims 1 to 4, wherein the content of the tungsten oxide particles in 100% by weight of the second resin layer is 0.001% by weight or more.

6. The interlayer film for laminated glass according to any one of claims 1 to 5, wherein the second resin layer contains at least one kind of ingredient among a phthalocyanine compound, a naphthalocyanine compound and an anthracyanine compound.

7. The interlayer film for laminated glass according to claim 6, wherein the total content of the at least one kind of ingredient among a phthalocyanine compound, a naphthalocyanine compound and an anthracyanine compound in 100% by weight of the second resin layer is 0.05% by weight or less.

8. The interlayer film for laminated glass according to any one of claims 1 to 7, wherein the infrared ray reflection layer has a property of exhibiting the infrared ray transmittance, as measured according to the method in the description, 40% or less at at least one wavelength within the range of 800 to 2000 nm.

9. The interlayer film for laminated glass according to any one of claims 1 to 8, wherein the infrared ray reflection layer is a resin film with metal foil, a multilayer laminated film in which a metal layer and a dielectric layer are formed on a resin layer, a multilayer resin film or a liquid crystal film.

10. The interlayer film for laminated glass according to any one of claims 1 to 9, wherein the thermoplastic resin in the first resin layer is a polyvinyl acetal resin and the thermoplastic resin in the second resin layer is a polyvinyl acetal resin.

11. The interlayer film for laminated glass according to any one of claims 1 to 10, wherein the first resin layer contains a plasticizer and the second resin layer contains a plasticizer.

12. The interlayer film for laminated glass according to any one of claims 1 to 11, wherein the first resin layer contains an ultraviolet ray screening agent.

13. The interlayer film for laminated glass according to any one of claims 1 to 12, wherein the second resin layer contains an ultraviolet ray screening agent.

14. The interlayer film for laminated glass according to any one of claims 1 to 13, wherein the infrared ray transmittance in the wavelength of 780 to 2100 nm, as measured according to the method in the description, of the first resin layer is higher than the infrared ray transmittance in the wavelength of 780 to 2100 nm, as measured according to the method in the description, of the second resin layer.

15. A laminated glass, comprising a first laminated glass member, a second laminated glass member and the interlayer film for laminated glass according to any one of claims 1 to 14,
the interlayer film being arranged between the first laminated glass member and the second laminated glass member,
the first laminated glass member being arranged on the outside of the first resin layer in the interlayer film for laminated glass, and
the second laminated glass member being arranged on the outside of the second resin layer in the interlayer film for laminated glass.

16. The laminated glass according to claim 15, wherein the infrared ray transmittance in the wavelength of 780 to 2100 nm, as measured according to the method in the description, of the first laminated glass member is higher than the infrared ray transmittance in the wavelength of 780 to 2100 nm, as measured according to the method in the description, of the second laminated glass member.

17. A method for fitting laminated glass according to claim 15 or 16 on an opening part between an outer space and an inner space into which heat rays are made incident from the outer space, in building or a vehicle, comprising the step of fitting the laminated glass into the opening part so that the first laminated glass member is positioned at the outer space side and the second laminated glass member is positioned at the inner space side.

## Patentansprüche

1. Zwischenschichtfilm für Verbundglas, umfassend eine Infrarotstrahlenreflexionsschicht zum Reflektieren von Infrarotstrahlen, eine erste Harzschicht, die ein thermoplastisches Harz enthält, und eine zweite Harzschicht, welche ein thermoplastisches Harz enthält,
wobei die erste Harzschicht auf einer ersten Oberflächenseite der Infrarotstrahlenreflexionsschicht angeordnet ist,
wobei die zweite Harzschicht auf einer zweiten Oberflächenseite entgegengesetzt der ersten Oberfläche der Infrarotstrahlenreflexionsschicht angeordnet ist,
wobei die zweite Harzschicht beide von mit Zinn dotierten Indiumoxidpartikeln und Wolframoxidpartikeln enthält, wobei der Gehalt der Wolframoxidpartikel in 100 Gew.-% der zweiten Harzschicht 0,04 Gew.-% oder weniger beträgt und der Gesamtgehalt der mit Zinn dotierten Indiumoxidpartikel und der Wolframoxidpartikel in 100 Gew.-% der zweiten Harzschicht 0,01 Gew.-% oder mehr und 6 Gew.-% oder weniger beträgt.

2. Zwischenschichtfilm für Verbundglas nach Anspruch 1, wobei das Verhältnis von dem Gehalt der mit Zinn dotierten Indiumoxidpartikel in 100 Gew.-% der zweiten Harzschicht zu dem Gehalt der Wolframoxidpartikel in 100 Gew.-% der zweiten Harzschicht über 8 beträgt.

3. Zwischenschichtfilm für Verbundglas nach Anspruch 1, wobei das Verhältnis von dem Gehalt der mit Zinn dotierten Indiumoxidpartikel in 100 Gew.-% der zweiten Harzschicht zu dem Gehalt der Wolframoxidpartikel in 100 Gew.-% der zweiten Harzschicht über 5 beträgt.

4. Zwischenschichtfilm für Verbundglas nach Anspruch 1, wobei das Verhältnis von dem Gehalt der mit Zinn dotierten Indiumoxidpartikel in 100 Gew.-% der zweiten Harzschicht zu dem Gehalt der Wolframoxidpartikel in 100 Gew.-% der zweiten Harzschicht 1 oder mehr und 30 oder weniger beträgt.

5. Zwischenschichtfilm für Verbundglas nach einem der Ansprüche 1 bis 4, wobei der Gehalt der Wolframoxidpartikel in 100 Gew.-% der zweiten Harzschicht 0,001 Gew.-% oder mehr beträgt.

6. Zwischenschichtfilm für Verbundglas nach einem der Ansprüche 1 bis 5, wobei die zweite Harzschicht mindestens eine Art Inhaltsstoff unter einer Phthalocyaninverbindung, einer Naphthalocyaninverbindung und einer Anthracyaninverbindung enthält.

7. Zwischenschichtfilm für Verbundglas nach Anspruch 6, wobei der Gesamtgehalt der mindestens einen Art Inhaltsstoff unter einer Phthalocyaninverbindung, einer Naphthalocyaninverbindung und einer Anthracyaninverbindung in 100 Gew.-% der zweiten Harzschicht 0,05 Gew.-% oder weniger beträgt.

8. Zwischenschichtfilm für Verbundglas nach einem der Ansprüche 1 bis 7, wobei die Infrarotstrahlenreflexionsschicht eine Eigenschaft des Aufweisens der Infrarotstrahlentransmission, gemessen gemäß dem Verfahren in der Beschreibung, von 40 % oder weniger bei mindestens einer Wellenlänge innerhalb des Bereichs von 800 bis 2000 nm besitzt.

9. Zwischenschichtfilm für Verbundglas nach einem der Ansprüche 1 bis 8, wobei die Infrarotstrahlenreflexionsschicht ein Harzfilm mit Metallfolie, ein mehrschichtiger laminierter Film, in dem eine Metallschicht und eine dielektrische Schicht auf einer Harzschicht ausgebildet sind, eine mehrschichtiger Harzfilm oder ein Flüssigkristallfilm ist.

10. Zwischenschichtfilm für Verbundglas nach einem der Ansprüche 1 bis 9, wobei das thermoplastische Harz in der ersten Harzschicht ein Polyvinylacetalharz ist und das thermoplastische Harz in der zweiten Harzschicht ein Polyvinylacetalharz ist.

11. Zwischenschichtfilm für Verbundglas nach einem der Ansprüche 1 bis 10, wobei die erste Harzschicht ein Weichmachungsmittel enthält und die zweite Harzschicht ein Weichmachungsmittel enthält.

12. Zwischenschichtfilm für Verbundglas nach einem der Ansprüche 1 bis 11, wobei die erste Harzschicht ein Ultraviolettstrahlenschutzmittel enthält.

13. Zwischenschichtfilm für Verbundglas nach einem der Ansprüche 1 bis 12, wobei die zweite Harzschicht ein Ultraviolettstrahlenschutzmittel enthält.

14. Zwischenschichtfilm für Verbundglas nach einem der Ansprüche 1 bis 13, wobei die Infrarotstrahlentransmission in der Wellenlänge von 780 bis 2100 nm, gemessen gemäß dem Verfahren in der Beschreibung, der ersten Harzschicht höher als die Infrarotstrahlentransmission in der Wellenlänge von 780 bis 2100 nm, gemessen gemäß dem Verfahren in der Beschreibung, der zweiten Harzschicht ist.

15. Verbundglas, umfassend ein erstes Verbundglaselement, ein zweites Verbundglaselement und den Zwischenschichtfilm für Verbundglas nach einem der Ansprüche 1 bis 14,
wobei der Zwischenschichtfilm zwischen dem ersten Verbundglaselement und dem zweiten Verbundglaselement angeordnet ist,
wobei das erste Verbundglaselement außen auf der ersten Harzschicht in dem Zwischenschichtfilm für Verbundglas angeordnet ist und
wobei das zweite Verbundglaselement außen auf der zweiten Harzschicht in dem Zwischenschichtfilm für Verbundglas angeordnet ist.

16. Verbundglas nach Anspruch 15, wobei die Infrarotstrahlentransmission in der Wellenlänge von 780 bis 2100 nm, gemessen gemäß dem Verfahren in der Beschreibung, des ersten Verbundglaselements höher als die Infrarotstrahlentransmission in der Wellenlänge von 780 bis 2100 nm, gemessen gemäß dem Verfahren in der Beschreibung, des zweiten Verbundglaselements ist.

17. Verfahren zum Einpassen von Verbundglas gemäß Anspruch 15 oder 16 an ein Öffnungsteil zwischen einem äußeren Raum und einem inneren Raum, in den Wärmestrahlen aus dem äußeren Raum einfallen gelassen werden, in einem Gebäude oder einem Fahrzeug, umfassend den Schritt des Einpassens des Verbundglases in das Öffnungsteil, sodass das erste Verbundglaselement auf der Seite des äußeren Raums positioniert ist und das zweite Verbundglaselement auf der Seite des inneren Raums positioniert ist.

## Revendications

1. Film de couche intermédiaire pour verre feuilleté, comprenant une couche de réflexion de rayons infrarouges pour réfléchir des rayons infrarouges, une première couche de résine contenant une résine thermoplastique et une deuxième couche de résine contenant une résine thermoplastique,
la première couche de résine étant agencée sur un premier côté de surface de la couche de réflexion de rayons infrarouges,
la deuxième couche de résine étant agencée sur un deuxième côté de surface opposé à la première surface de la couche de réflexion de rayons infrarouges,
dans lequel la deuxième couche de résine contient à la fois des particules d'oxyde d'indium dopées à l'étain et des particules d'oxyde de tungstène, la teneur en particules de tungstène dans 100 % en poids de la deuxième couche de résine est de 0,04 % en poids ou moins, et la teneur totale en particules d'oxyde d'indium dopées à l'étain et en particules d'oxyde de tungstène dans 100 % en poids de la deuxième couche de résine est de 0,01 % en poids ou plus et de 6 % en poids ou moins.

2. Film de couche intermédiaire pour verre feuilleté selon la revendication 1, dans lequel le rapport de la teneur en particules d'oxyde d'indium dopées à l'étain dans 100 % en poids de la deuxième couche de résine sur la teneur en particules d'oxyde de tungstène dans 100 % en poids de la deuxième couche de résine est supérieur à 8.

3. Film de couche intermédiaire pour verre feuilleté selon la revendication 1, dans lequel le rapport de la teneur en particules d'oxyde d'indium dopées à l'étain dans 100 % en poids de la deuxième couche de résine sur la teneur en particules d'oxyde de tungstène dans 100 % en poids de la deuxième couche de résine est supérieur à 5.

4. Film de couche intermédiaire pour verre feuilleté selon la revendication 1, dans lequel le rapport de la teneur en particules d'oxyde d'indium dopées à l'étain dans 100 % en poids de la deuxième couche de résine sur la teneur en particules d'oxyde de tungstène dans 100 % en poids de la deuxième couche de résine est 1 ou plus et 30 ou moins.

5. Film de couche intermédiaire pour verre feuilleté selon l'une quelconque des revendications 1 à 4, dans lequel la teneur en particules d'oxyde de tungstène dans 100 % en poids de la deuxième couche de résine est de 0,001 % en poids ou plus.

6. Film de couche intermédiaire pour verre feuilleté selon l'une quelconque des revendications 1 à 5, dans lequel la deuxième couche de résine contient au moins un type d'ingrédient parmi un composé de phtalocyanine, un composé de naphtalocyanine et un composé d'anthracyanine.

7. Film de couche intermédiaire pour verre feuilleté selon la revendication 6, dans lequel la teneur totale en au moins un type d'ingrédient parmi un composé de phtalocyanine, un composé de naphtalocyanine et un composé d'anthracyanine dans 100 % en poids de la deuxième couche de résine est de 0,05 % en poids ou moins.

8. Film de couche intermédiaire pour verre feuilleté selon l'une quelconque des revendications 1 à 7, dans lequel la couche de réflexion de rayons infrarouges a une propriété de présenter la transmittance de rayons infrarouges, telle que mesurée selon le procédé dans la description, de 40 % ou moins à au moins une longueur d'onde dans la plage de 800 à 2000 nm.

9. Film de couche intermédiaire pour verre feuilleté selon l'une quelconque des revendications 1 à 8, dans lequel la couche de réflexion de rayons infrarouges est un film de résine avec une feuille métallique, un film feuilleté multicouche dans lequel une couche métallique et une couche diélectrique sont formées sur une couche de résine, un film de résine multicouche ou un film de cristaux liquides.

10. Film de couche intermédiaire pour verre feuilleté selon l'une quelconque des revendications 1 à 9, dans lequel la résine thermoplastique dans la première couche de résine est une résine d'acétal polyvinylique et la résine thermoplastique dans la deuxième couche de résine est une résine d'acétal polyvinylique.

11. Film de couche intermédiaire pour verre feuilleté selon l'une quelconque des revendications 1 à 10, dans lequel la première couche de résine contient un plastifiant et la deuxième couche de résine contient un plastifiant.

12. Film de couche intermédiaire pour verre feuilleté selon l'une quelconque des revendications 1 à 11, dans lequel la première couche de résine contient un agent filtrant les rayons ultraviolets.

13. Film de couche intermédiaire pour verre feuilleté selon l'une quelconque des revendications 1 à 12, dans lequel la deuxième couche de résine contient un agent filtrant les rayons ultraviolets.

14. Film de couche intermédiaire pour verre feuilleté selon l'une quelconque des revendications 1 à 13, dans lequel la transmittance de rayons infrarouges dans la longueur d'onde de 780 à 2100 nm, telle que mesurée selon le procédé dans la description, de la première couche de résine, est supérieure à la transmittance de rayons infrarouges dans la longueur d'onde de 780 à 2100 nm, telle que mesurée selon le procédé dans la description, de la deuxième couche de résine.

15. Verre feuilleté, comprenant un premier organe de verre feuilleté, un deuxième organe de verre feuilleté et le film de couche intermédiaire pour verre feuilleté selon l'une quelconque des revendications 1 à 14,
le film de couche intermédiaire étant agencé entre le premier organe de verre feuilleté et le deuxième organe de verre feuilleté,
le premier organe de verre feuilleté étant agencé sur l'extérieur de la première couche de résine dans le film de couche intermédiaire pour verre feuilleté, et
le deuxième organe de verre feuilleté étant agencé sur l'extérieur de la deuxième couche de résine dans le film de couche intermédiaire pour verre feuilleté.

16. Verre feuilleté selon la revendication 15, dans lequel la transmittance de rayons infrarouges dans la longueur d'onde de 780 à 2100 nm, telle que mesurée selon le procédé dans la description, du premier organe de verre feuilleté est supérieure à la transmittance de rayons infrarouges dans la longueur d'onde de 780 à 2100 nm, telle que mesurée selon le procédé dans la description, du deuxième organe de verre feuilleté.

17. Procédé pour ajuster un verre feuilleté selon la revendication 15 ou 16 sur une partie d'ouverture entre un espace extérieur et un espace intérieur dans lequel des rayons de chaleur sont rendus incidents depuis l'espace extérieur, dans un bâtiment ou un véhicule, comprenant l'étape consistant à ajuster le verre feuilleté dans la partie d'ouverture de sorte que le premier organe de verre feuilleté soit positionné du côté de l'espace extérieur, et que le deuxième organe de verre feuilleté soit positionné du côté de l'espace intérieur.
